# EUROPÄISCHE PATENTSCHRIFT

(11) **EP 2 475 896 B1**
(45) Veröffentlichungstag und Bekanntmachung des Hinweises auf die Patenterteilung: **05.11.2014**
(21) Anmeldenummer: 10760909.1
(22) Anmeldetag: 09.09.2010
(51) Int. Cl.: F16B 23/00

(54) **GEWINDEELEMENT SOWIE WERKZEUG**
THREADED ELEMENT AND TOOL
ÉLÉMENT FILETÉ ET OUTIL

(30) Priorität: 11.09.2009 DE 102009040955; 08.03.2010 DE 102010010674; 12.03.2010 DE 202010003562 U
(43) Veröffentlichungstag der Anmeldung: 18.07.2012
(73) Patentinhaber: Flaig, Hartmut, 78554 Aldingen (DE)
(72) Erfinder: HOLSCHER, Winfried, K. W., 78234 Engen (DE)
(74) Vertreter: Wagner, Kilian
(86) Internationale Anmeldenummer: PCT/EP2010/005529
(87) Internationale Veröffentlichungsnummer: WO 2011/029591

(56) Entgegenhaltungen:
- DE-A1- 3 006 464
- DE-A1- 10 136 546
- DE-C- 131 445
- DE-U1- 9 013 458
- GB-A- 1 074 513
- GB-A- 1 272 215
- GB-A- 2 037 390
- GB-A- 2 313 168
- US-A1- 2003 019 259

## Beschreibung

Die Erfindung betrifft ein Gewindeelement, insbesondere ein Außengewindeelement oder ein Innengewindeelement, mit einem Gewinde gemäß dem Oberbegriff des Anspruchs 1. Ferner betrifft die Erfindung ein zum Zusammenwirken mit einem derartigen Gewindeelement ausgebildetes Werkzeug.

Es sind Schrauben in verschiedenen Ausführungen bekannt. Die normalerweise verwendeten Schrauben besitzen im Schraubenkopf einen in der Richtung eines Durchmessers verlaufenden Schlitz oder einen sogenannten Kreuzschlitz, in den ein entsprechend ausgestalteter Schraubendreher einsetzbar ist. Zur Übertragung größerer Drehmomente sind sogenannte Inbusschrauben oder Torxschrauben mit einem Inbus bzw. Torxantrieb bekannt. Nachteilig bei derartigen Schrauben ist, dass diese mit handelsüblichen Werkzeugen, beispielsweise eines Inbusschlüssels oder eines Torxschlüssels gelöst werden können.

Aus der DE 101 36 546 A1 ist eine drehsichere Schraube bekannt, die eine stirnseitige Aussparung aufweist, die mit einem Aussparungsgrund (Bodenfläche) versehen ist, von der ausgehend sich eine weitere Aussparung in das Kopfteil der Schraube in axialer Richtung hinein erstreckt. Bei der zweiten Aussparung handelt es sich um Formschlussmittel zum Herstellen eines axialen Formschlusses mit einem Antriebswerkzeug. Dadurch, dass sich das Antriebswerkzeug in der exzentrisch angeordneten zweiten Aussparung sowie an der zylindrischen Innenumfangsfläche der ersten (vorderen) Aussparung abstützt, können Drehmomente auf das Außengewindeelement zum Zwecke des Verschraubens mit einem Innengewindeelement aufgebracht werden. Die bekannte drehsichere Schraube hat den Vorteil, dass diese nur mit im Handel nicht erhältlichen Spezialwerkzeugen betätigbar ist, so dass sich die Schraube bevorzugt zum Festlegen von kostenintensiven Teilen, beispielsweise Solarmodulen eignet. Nachteilig ist jedoch, dass die drehsichere Schraube sich nicht optimal zur Benutzung mit Schraubautomaten eignet. Würde die bekannte drehsichere Schraube in mit einem umfangsgeschlossenen Gummihalteelement zusammenwirkenden Schraubautomaten verwendet, würde diese unwuchtig rotieren, wodurch eine sichere Findung der Innengewindeöffnung eines Innengewindeelementes nicht gewährleistet wäre. Um den Rundlauf zu optimieren, müssten entsprechende Magnetmittel oder ein gummielastischer Klemmring vorgesehen werden.

Aus der DE 30 06 464 A1 ist ebenfalls eine Sicherungsschraube bekannt. Die bekannte Schraube zeichnet sich dadurch aus, dass diese im Bereich ihres Schraubenkopfes als einzigen Antrieb einen Innenkonus aufweist, der zum Zusammenwirken mit einem außenkonusförmigen Werkzeug ausgebildet ist. Die bekannte Schraube lässt sich nur mit einem Spezialwerkzeug lösen. Nachteilig ist jedoch, dass es zum Anziehen und Lösen der Schraube zwingend notwendig ist, eine ausreichend hohe Axialkraft aufzubringen, um einen Reibschluss mit dem außenkonusförmigen Werkzeug zu gewährleisten.

Aus der deutschen Patentschrift Nr. 131445 vom 16. November 1901 ist eine Sicherungsschraube bekannt, die ausschließlich in eine einzige Umfangsrichtung betätigbar ist. Die bekannte Schraube eignet sich nicht zur Verwendung mit zum damaligen Zeitpunkt nicht existenten Schraubautomaten.

Aus der GB 2 037 390 A ist ein Gewindeelement umfassend eine äußere, zylindrische Umfangsfläche sowie sich in axialer Richtung erstreckende, exzentrische Formschlussmittel in Form einer zylindrischen Vertiefung bekannt. Das bekannte Gewindeelement eignet sich nicht optimal zur Verwendung mit Schraubautomaten, da die Kombination Gewindeelement/Schraubautomat keinen optimierten Rundlauf sicherstellt. Darüber hinaus müssen separaten Fixiermittel, insbesondere Magnetmittel oder ein Gummiring vorgesehen werden, um das Gewindeelement im Schraubautomat bei einer Rotation zu halten.

Aus der GB 1 272 215 ist ein Gewindeelement mit einer innenkonischen Umfangsfläche sowie drei axialen Formschlussmitteln bekannt von denen zwei exzentrisch zur Längsmittelachse angeordnet sind. Auf die Umfangsfläche wirkt beim Anziehen des Gewindeelementes kein Drehmoment ausgehend vom Werkzeug. Das Drehmoment wird von den axialen Formschlussmitteln vollständig aufgenommen. Durch das Vorsehen des Innenkonus wird das Gewindeelement bei der Aufnahme mittels eines Werkzeugs zentriert. Es müssen jedoch für den Fall, dass das Gewindeelement mit einem Schraubautomat verwendet wird, zusätzliche Haltemittel in Form eines gummielastischen Ringes und/oder eines Magneten vorgesehen werden, was im letztgenannten Fall die Ausbildung des Gewindeelementes aus magnetischem Material bedingt. Zudem ist kein optimaler Rundlauf im Schraubautomaten sichergestellt.

Ausgehend von dem vorgenannten Stand der Technik liegt der Erfindung die Aufgabe zugrunde, ein verbessertes Gewindeelement anzugeben, das sich nicht mit herkömmlichen Werkzeugen, wie Inbusschlüsseln oder Torxschlüsseln lösen lässt, das derart ausgebildet ist, dass zum Einschrauben keine großen Axialkräfte notwendig sind und das zudem mit Schraubautomaten verwendbar ist, derart, dass ein optimierter Rundlauf gewährleistet ist. Ganz besonders bevorzugt soll das Gewindeelement derart ausgebildet sein, dass es derart mit dem Schraubautomat zusammenwirkt bzw. in diesem gehalten wird, dass auf zusätzliche Magnetmittel zum Halten des Gewindeelementes bei der Rotationsbewegung und/oder einen gummielastischen Ring zur Halterung des Gewindeelementes verzichtet werden kann. Bevorzugt soll das erfindungsgemäße Außengewindeelement kostengünstig herstellbar sein. Ganz besonders bevorzugt soll das Gewindeelement mit einem Antriebswerkzeug nicht wieder lösbar sein. Ferner besteht die Aufgabe darin, ein, vorzugsweise als Schraubautomat ausgebildetes, Werkzeug zum Zusammenwirken mit dem Gewindeelement anzugeben.

Diese Aufgabe wird bei einem gattungsgemäßen, vorzugsweise aus Metall bestehenden, Gewindeelement mit den Merkmalen des Anspruchs 1 gelöst. Hinsichtlich des Werkzeugs wird die Erfindung mit den Merkmalen des Anspruchs 13 gelöst.

In Abkehr von der Lehre der GB 1 272 215 liegt der Erfindung der Gedanke zugrunde, den Winkel, den die Konusfläche mit einer Achse (A) einschließt, zu der die Konusfläche konzentrisch angeordnet ist, so zu wählen, dass das Gewindeelement in einem einen entsprechenden Gegenkonus (mit dem gleichen Konuswinkel wie die Konusfläche, d.h. Umfangsfläche des Gewindeelementes) aufweisenden Werkzeug bei vertikaler Ausrichtung ohne weitere Hilfsmittel wie einem Magnet oder gummielastischen Klemmmitteln, wie einem Gummiring ausschließlich aufgrund der Konus-/Gegenkonusverbindung gehalten werden kann. Auf die Kombination einer Konusfläche mit einem derartig kleinen Winkel α von weniger als 10° mit sich in axialer Richtung erstreckenden Formschlussmitteln ergibt ein Gewindeelement mit völlig neuen Eigenschaften. So trägt der kleine Winkel α der Konusfläche dazu bei, dass, wie erwähnt, das Gewindeelement sicher in einem entsprechenden Werkzeug gehalten ist, ohne dass zusätzliche Haltemittel vorgesehen werden müssen. Darüber hinaus garantiert das Vorsehen der mit dem Werkzeug in Wechselwirkung tretenden Konusfläche (Umfangsfläche) einen optimalen Rundlauf, insbesondere dann, wenn die Drehachse des Werkzeugs mit der Längsmittelachse des Gewindeelementes zusammenfällt. Die Achse (A), zu der die Konusfläche des Gewindeelementes konzentrisch ist, fällt mit der Längsmittelachse (L) des Gewindeelementes zusammen (d.h. es handelt sich um ein und dieselbe Achse). Die Konusfläche mit ihrem kleinen Neigungswinkel α führt also zusammengefasst bereits zu zwei Vorteilen, nämlich einem sicheren Halt in einem vorzugsweise als Schraubautomat ausgebildeten Werkzeug und zudem zu einem optimierten Rundlauf. Im Gegensatz zu bekannten Morsekegelantrieben kann das Gewindeelement jedoch eingeschraubt werden, ohne dass es notwendig ist, dabei große Axialkräfte aufzubringen, was einen weiteren entscheidenden Vorteil der Erfindung darstellt. Die Drehmomentübertragung erfolgt durch Wechselwirkung des Werkzeuges mit den Formschlussmitteln und nicht oder zumindest nicht ausschließlich aufgrund der Konus-/Gegenkonusverbindung. Die Wahl des Winkels α von weniger als 10° ermöglicht dabei eine ganz besonders bevorzugte Ausführungsvariante, bei der als Formschlussmittel entweder ausschließlich eine Vertiefung oder ein Axialfortsatz vorgesehen ist, wobei in diesem Fall die Drehmomentübertragung durch kombinierte Wechselwirkung des Werkzeugs mit den Formschlussmitteln und der Umfangsfläche erfolgt, dass sich das Werkzeug zum Aufbringen des Drehmoments also zum einen an einer Umfangsfläche der Formschlussmittel und zudem an der konischen Umfangsfläche abstützt. Würde beispielsweise bei dem aus der GB 1 272 215 bekannten Gewindeelement nur ein einziges Formschlussmittel in Form einer axialen Vertiefung vorgesehen werden, so würde das Werkzeug beim Aufbringen des Drehmomentes zwangsläufig aus dem Innenkonus herausgehebelt, wenn nicht extrem hohe Axialkräfte aufgebracht würden. Das Aufbringen solcher hohen Axialkräfte ist jedoch in vielen Situationen, beispielsweise bei Arbeiten auf Dächern zur Fixierung von Solarelementen und/oder bei schwer zugänglichen Verschraubungspositionen nicht möglich.

Zusammenfassend wird also durch die Kombination einer außen- oder innenkonischen Umfangsfläche des Antriebs mit einem entsprechend kleineren Neigungswinkel α zwischen der Konusfläche und der Achse (A) (entspricht der Längsmittelachse L) mit, vorzugsweise axial und/oder radial zu der Umfangsfläche versetzten, Formschlussmitteln erstmals ein Gewindeelement bereitgestellt, das sich durch einen optimalen Rundlauf, einen sicheren Halt im Werkzeug sowie dadurch auszeichnet, dass zum Einschrauben bzw. zur Drehmomentübertragung keine großen Axialkräfte aufgebracht werden müssen. Zudem ist das Gewindeelement extrem diebstahlhemmend oder wie später noch erläutert werden wird bei der Realisierung einer Betätigungsmöglichkeit in ausschließlich eine Umfangsrichtung diebstahlsicher.

Die Umfangsfläche ist konzentrisch zur Längsmittelachse des Gewindeelements angeordnet, wobei die vorerwähnte Achse A mit der Längsmittelachse des Gewindeelementes zusammenfällt. Die Formschlussmittel müssen exzentrisch angeordnet werden, wobei zusätzlich auch konzentrische Formschlussmittel vorgesehen werden können, auf die jedoch gemäß einer besonders bevorzugten Ausführungsvariante verzichtet wird. Im Falle des Vorsehens einer einzigen axialen Vertiefung als Formschlussmittel oder eines einzigen axialen Fortsatzes als Formschlussmittel sind diese derart relativ zur Umfangsfläche anzuordnen, dass das Werkzeug zum Beaufschlagen des Gewindeelementes mit einem Drehmoment sich zum einen an einer Umfangswand der Formschlussmittel und zum anderen an der konischen Umfangsfläche abstützt also sowohl mit der Umfangsfläche als auch mit den Formschlussmitteln drehmomentübertragend zusammenwirkt.

Sichergestellt sein muss, dass im Falle des Vorsehens einer einzigen Vertiefung oder alternativ eines einzigen Fortsatzes als Formschlussmittel diese Formschlussmittel exzentrisch angeordnet sind in Bezug auf die Achse A, zu der die außen- oder innenkonische Umfangsfläche konzentrisch angeordnet ist.

Gemäß einer möglichen Ausführungsvariante der Erfindung ist vorgesehen, dass die Innenumfangsfläche einer stirnseitigen, einen die Grundfläche bildenden Aussparungsgrund aufweisenden Aussparung des Gewindeelementes nicht durchgehend zylindrisch, sondern, zumindest abschnittsweise, vorzugsweise axial durchgehend, als Innenkonusfläche zum Zusammenwirken mit einem Außenkonusabschnitt eines Werkzeuges auszubilden, wobei die Konusfläche mit der Achse, zu der sie konzentrisch ausgebildet ist und mit der Längsmittelachse des Gewindeelements zusammenfällt oder parallel und beabstandet dazu angeordnet ist, einen Winkel α von weniger als 10° einschließt. Die, zumindest abschnittsweise, innenkonische Ausbildung der Aussparung weist gegenüber bekannten Gewindeelementen wesentliche Vorteile auf. So hat der Innenkonusabschnitt zum einen die Aufgabe einer Zentrierung des Gewindeelementes am Werkzeug. Darüber hinaus wird ein erleichtertes Finden der Aussparung mittels des Werkzeuges gewährleistet. Ein wesentlicher Vorteil besteht darin, dass der Innenkonusabschnitt dazu ausgebildet und bestimmt ist, mit einem komplementären Außenkonusabschnitt eines Werkzeugs zusammenzuarbeiten, wodurch sich das Gewindeelement bevorzugt zum Zusammenwirken mit einem Schraubautomaten, also einem Schraubroboter, insbesondere in Fertigungsanlagen, beispielsweise in der Automobilindustrie, eignet. Durch geeignete Wahl des Winkels α wird das Gewindeelement von selbst bzw. aufgrund der Klemmwirkung im Gegenkonus des Werkzeugs gehalten. Dadurch, dass das Werkzeug einen mit dem Innenkonusabschnitt korrespondierenden Außenkonus aufweist, wird ein unwuchtiges Rotieren des von dem Werkzeug aufgenommenen Gewindeelementes sicher vermieden. Darüber hinaus können im Vergleich zu der aus der DE 101 36 546 A1 bekannten Schraube höhere Drehmomente aufgebracht werden, da eine Drehmomentübertragung auch auf den innenkonusförmigen Bereich der Aussparung des Gewindeelementes möglich ist. Im Gegensatz zu der aus der DE 30 06 464 A1 bekannten Schraube muss jedoch nicht zwingend eine Axialkraft aufgebracht werden, um das Gewindeelement verschrauben zu können, da die Formschlussmittel in axialer Richtung einen Formschluss gewährleisten, der wiederum ein Abstützen des Werkzeugs in Umfangsrichtung zum einen am Umfang der Formschlussmittel und zum anderen am innenkonusförmigen Umfang der Aussparung ermöglicht. Ein Fachmann hätte die DE 30 06 464 A1 bei einer Suche nach einer Lösung seiner Aufgabe nicht mit der DE 101 36 546 A1 kombiniert, da die DE 30 06 464 A1 gerade darauf abstellt, dass zusätzlich zu dem Innenkonus keine weiteren Antriebsgeometrien, also Formschlussgeometrien zum Zusammenwirken mit einem Werkzeug vorhanden sein sollen. Zudem offenbaren vorgenannte Druckschriften nicht die wesentliche Bemessung des Winkels α. Gemäß einer alternativen Ausführungsvariante, die zusätzlich oder bevorzugt alternativ zur Ausbildung der Umfangsfläche als Innenkonusfläche einer stirnseitigen Aussparung realisierbar ist, kann als Umfangsfläche eine, vorzugsweise von einem Schraubenkopf oder von dem Außenumfang einer Mutter gebildete, Außenkonusfläche zum Zusammenwirken mit dem Antriebswerkzeug vorgesehen werden. In diesem Fall ist die Grundfläche, ausgehend von der sich die Formschlussmittel in axialer Richtung erstrecken, bevorzugt eine obere, vorzugsweise kreisförmig konturierte, Stirnfläche des Gewindeelementes.

Die Formschlussmittel und die Konusfläche müssen in eine gemeinsame Richtung weisen, d.h. derart angeordnet sein, dass durch Aufstecken eines einzigen Werkzeugs in eine einzige Axialrichtung sowohl eine Wirkverbindung mit der Konusfläche als auch mit den Formschlussmitteln, ggf. nach Verdrehen des Werkzeugs in Umfangsrichtung, erzielt werden. Bevorzugt sind die Formschlussmittel und die Konusfläche derart angeordnet, dass das Werkzeug in Einschraubrichtung des Gewindeelementes aufsteckbar ist, derart, dass dieses sowohl mit der Konusfläche als auch mit den Formschlussmitteln zusammenwirken kann.

Bei dem Gegengewinde handelt es sich im Falle der Ausbildung des Gewindes des Gewindeelementes als Außengewinde um ein Innengewinde und im Falle der Ausbildung des Gewindes des Gewindeelementes als Innengewinde um ein Außengewinde.

Unter der Längsmittelachse des Gewindeelementes wird die Längsmittelachse des Gewindes bzw. des Gewindeabschnittes des Gewindeelementes verstanden, die identisch mit der Achse A ist.

Unter der fakultativ vorgesehenen Grundfläche des Antriebsabschnitts, ausgehend von der sich die Formschlussmittel ggf. in die eine oder andere Axialrichtung erstrecken wird in erster Linie ein unteres oder oberes Ende der Formschlussmittel bzw. ein Startpunkt für deren Axialerstreckung verstanden. Die Grundfläche kann im Extremfall auf Punkt oder Strichstärke reduziert sein, wobei es bevorzugt ist, wenn die Grundfläche - was in der Praxis immer der Fall sein wird, da eindimensionale Geometrien nur in der Theorie existieren - eine zumindest minimale zweidimensionale Erstreckung aufweisen.

Unter der außen- oder alternativ innenkonischen Umfangsfläche wird eine umfangsgeschlossene Fläche verstanden, d.h. eine Außenkonus- oder Innenkonusfläche, die sich über den gesamten Außen- oder Innenumfang erstreckt.

Bevorzugt ist zusätzlich zu dem aus Konus und Formschlussmitteln bestehenden Antrieb kein weiterer Antrieb, insbesondere keine Schlüsselflächen, kein Torxantrieb, kein Inbusantrieb, kein Schlitz- oder Kreuzschlitzantrieb, etc. vorhanden.

Wie eingangs bereits erwähnt, ist es besonders bevorzugt, den Winkel α, der aufgespannt wird zwischen der außenkonischen oder innenkonischen Umfangsfläche des Antriebs und einer Achse A zu der die Umfangsfläche konzentrisch angeordnet ist so gewählt wird, dass das Gewindeelement mit seiner innen- oder außenkonischen Umfangsfläche in einem zur Umfangsfläche korrespondierenden Gegenkonus ohne weitere Hilfsmittel gehalten wird, auch dann, wenn die Längsmittelachse des im Gegenkonus gehaltenen Gewindeelementes vertikal ausgerichtet und das Gewindeelement nach unten und das Haltewerkzeug nach oben weist. Anders ausgedrückt wird also der Winkel α so gewählt, dass zumindest das Eigengewicht des Gewindeelementes ohne weitere Hilfsmittel in einem zur Umfangsfläche korrespondierenden Gegenkonus gehalten wird, selbstverständlich auch dann, wenn die Umfangsfläche und die korrespondierende Gegenkonusfläche in üblicher Weise wie bei Normschrauben glatt ausgebildet sind, d.h. keine im Vergleich zu herkömmlichen Schrauben erhöhte Rauhigkeit aufweisen. Unter einem korrespondierenden Gegenkonus wird dabei ein Konus verstanden, bei dem die Konusfläche mit einer Achse, zu der die Konusfläche konzentrisch angeordnet ist, einen Winkel einschließt, der dem Winkel α der Umfangsfläche entspricht, den diese mit einer Achse einschließt zu der sie Umfangsfläche konzentrisch angeordnet ist. Ganz besonders bevorzugt wird der Winkel so gewählt, dass das Gewindeelement im Gegenkonus mit einer Kraft gehalten wird, die größer ist als die Gewichtskraft also die nicht nur der Gewichtskraft entspricht, sondern vorzugsweise mindestens dem 1,1-fachen der Gewichtskraft des Gewindeelementes, vorzugsweise mindestens dem 1,5-fachen der Gewichtskraft des Gewindeelementes, ganz besonders bevorzugt mindestens dem 2-fachen, oder mindestens dem 3-fachen, oder mindestens dem 4-fachen, oder mindestens dem 5-fachen der Gewichtskraft, um auch bei einer Rotation des Gewindeelementes mit dem Werkzeug den sicheren Halt zu garantieren. Auf diese Weise wird ein sicherer Halt des Gewindeelementes in einem den Gegenkonus aufweisenden Werkzeug garantiert, ohne das weitere im Stand der Technik zum Einsatz kommende Hilfsmittel wie Magnete und/oder gummielastische Klemmmittel zum Einsatz kommen müssen.

In Abhängigkeit der Masse des Gewindeelementes und/oder in Abhängigkeit der Umdrehungszahl, mit der das Gewindeelement mittels des Werkzeugs zu rotieren ist, ist also der Winkel α zu wählen. Bevorzugt beträgt dieser weniger als 9°, noch weiter bevorzugt weniger als 8°, noch weiter bevorzugt weniger als 7°, noch weiter bevorzugt weniger als 6°, noch weiter bevorzugt weniger als 5°, noch weiter bevorzugt weniger als 4°, noch weiter bevorzugt weniger als 3°, noch weiter bevorzugt weniger als 2°, ganz besonders bevorzugt mehr als 0,5°.

In Weiterbildung der Erfindung ist mit Vorteil vorgesehen, dass die Formschlussmittel entweder als sich in axialer Richtung in Richtung vorderem Ende des Gewindeelementes erstreckende Vertiefung oder als sich axial in die Aussparung hinein erstreckender Fortsatz ausgebildet ist. Im Falle des Vorsehens einer Außenkonusfläche erstrecken sich die Formschlussmittel dabei gemäß einer ersten Alternative in axialer Einschraubrichtung des Gewindeelementes (d.h. falls vorhanden in Richtung Schaft) und stehen bei einer zweiten Alternative fortsatzartig entgegen der axialen Einschraubrichtung über die Grundfläche vor.

Das Gewindeelement bzw. die Formschlussmittel sind erfindungsgemäß derart ausgebildet, dass mit diesem/n das Gewindeelement ausschließlich in eine einzige Umfangsrichtung, insbesondere in Festziehrichtung (Einschraubrichtung), betätigbar ist. Dies kann dadurch realisiert werden, dass das Gewindeelement entgegen der einzigen Betätigungsrichtung widerlagerfrei ist oder anders ausgedrückt dadurch, dass die Formschlussmittel derart ausgebildet sind, dass mit diesen ausschließlich in einer einzigen Betätigungseinrichtung ein Formschluss zum Betätigen bzw. zum Verdrehen des Gewindeelementes herstellbar ist. Die exzentrischen Formschlussmittel sind also nur in eine Umfangsrichtung wirksam. Beim Verdrehen eines mit dem Konus und den Formschlussmitteln zusammenwirkenden Werkzeuges entgegen der einzigen Betätigungsrichtung resultiert gemäß der erfindungsgemäßen Weiterbildung kein ausreichender Formschluss, um das Gewindeelement verdrehen, vorzugsweise von an einem Gegengewindeelement lösen zu können.

Erfindungsgemäß ist weiter vorgesehen, dass die Formschlussmittel mindestens eine, ggf. ausschließlich eine, vorzugsweise stufenlose, Rampe bzw. Anlaufschräge angrenzt bzw. diesen in Umfangsrichtung vorgeordnet ist, die gewährleistet, dass entgegen der einzigen Betätigungsrichtung kein Formschluss mit einem entsprechenden Werkzeug erzielbar ist. Anders ausgedrückt sind die Formschlussmittel in Umfangsrichtung über eine, vorzugsweise stufenlose, Rampe zugänglich, die bei Betätigen des Gewindeelementes entgegen der einzigen Betätigungsrichtung derart bewirkt, dass die Gegenformschlussmittel zum Zusammenwirken mit den Formschlussmitteln des Gewindeelementes entlang der Rampe, vorzugsweise in Umfangsrichtung von den Formschlussmitteln weg gleiten.

Wie zuvor erwähnt, ist es besonders bevorzugt, wenn die Rampe auf einer von der einzigen Umfangsrichtung (Betätigungsrichtung), in die das Gewindeelement betätigbar ist abgewandten Umfangsrichtung angeordnet ist. Bevorzugt handelt es sich bei der Umfangsrichtung in die die Rampe ausgehend von den Formschlussmitteln orientiert ist um die theoretische Löserichtung, so dass das Gewindeelement ausschließlich festziehbar, jedoch nicht lösbar ist.

Besonders zweckmäßig ist eine erste Alternative der Erfindung nach der die Rampe (Schräge, Anlaufschräge) vom Nutgrund einer in Umfangsrichtung gekrümmten Nut gebildet ist. Anders ausgedrückt ist bevorzugt im Schraubenkopf eines Außengewindeelementes oder im Körper eines Innengewindeelementes eine gekrümmte Nut vorgesehen, deren Nutgrund nicht eben sondern zumindest abschnittsweise geneigt ist. Bevorzugt ist der Nutgrund stufenlos bzw. stetig ausgebildet um ein Entlanggleiten von Gegenformschlussmitteln eines Werkzeugs entlang des Nutgrundes (Rampe) zu gewährleisten, wenn das Werkzeug entgegen der einzigen Betätigungsrichtung betätigt wird. Bevorzugt ist die Umfangskontur der Nut teilkreisringförmig. Die Nut weist also bevorzugt zwei die Nut jeweils in radialer Richtung begrenzende Seitenwände auf und den die eigentliche Rampe bildenden Nutgrund.

Bevorzugt erstreckt sich die Rampe ausgehend von einen höher als die Grund-fläche gelegenen Ebene bis zur Grundfläche. Unter einer höher gelegenen Ebene ist dabei eine Ebene zu verstehen, die in axialer Richtung betrachtet höher, d.h. entgegen der Aufsteckrichtung eines mit dem Gewindeelement zusammenwirkenden Werkzeugs gelegenen Ebene angeordnet ist.

Besonders bevorzugt ist es, wenn die, vorzugsweise ausschließlich in eine Umfangsrichtung wirkenden Formschlussmitteln von einer Nutwand gebildet sind, die in die Betätigungsrichtung weist, bzw. die sich in radialer Richtung erstreckt, um in Umfangsrichtung betätigt werden zu können. Bevorzugt ist diese Nutwand teilzylinderförmig, also gerundet konturiert, kann jedoch auch beispielsweise als senkrecht zu den Seitenwänden verlaufende Nut ausgebildet sein.

Ganz besonders bevorzugt ist eine zweite Alternative der Erfindung, nach der die Formschlussmittel nicht radial innen relativ zu der Konusfläche, d.h. nicht radial innerhalb der Konusfläche, angeordnet sind sondern sich in einem Bereich - in radialer Richtung betrachtet - außerhalb der Konusfläche (Umfangsfläche) befinden, also auf einem größeren Radius in Bezug auf die Gewindeelementlängsmittelachse die als Außen- oder Innenkonus ausgebildete Konusfläche. Dabei ist vorgesehen, dass die Formschlussmittel zusammen mit einer den Formschlussmitteln zugeordneten Rampe auf einem Umfangsbund angeordnet sind, der die als Außenkonusfläche oder Innenkonusfläche ausgeführte Konusfläche in radialer Richtung nach außen überragt. Besonders zweckmäßig ist es, wenn mehrere, insbesondere gleichmäßig in Umfangsrichtung verteilt angeordnete Formschlussmittel auf dem Umfangsbund vorgesehen sind. Weiter bevorzugt ist es, wenn jedem der Formschlussmittel eine Rampe zugeordnet ist, die gewährleistet, dass das Gewindeelement nur in einer einzigen Betätigungsrichtung, insbesondere in Festziehrichtung betätigbar ist. Bevorzugt erstrecken sich die Rampen in Umfangsrichtung, d.h. sind gekrümmt ausgeführt. Noch weiter bevorzugt ist es, wenn die Rampen und/oder die zugehörigen Formschlussmittel in radialer Richtung bis zum Außenumfang des Gewindeelementes reichen.

Zweckmäßig ist, wenn insgesamt, d.h. ausschließlich drei Formschlussmittel mit jeweils einer zugehörigen Rampe vorgesehen sind, wobei die Formschlussmittel vorzugsweise in Umfangsrichtung um 120° zueinander versetzt angeordnet sind.

Besonders zweckmäßig ist es, wenn die Formschlussmittel jeweils von einer sich, zumindest näherungsweise, in axialer sowie in radialer Richtung erstreckenden Wand gebildet sind, wobei die Wand vorzugsweise jeweils einen Fortsatz in Umfangsrichtung begrenzt, welcher wiederum an der von den Formschlussmitteln in Umfangsrichtung abgewandten Seite die Rampe für die in Umfangsrichtung benachbarten Formschlussmittel bildet.

Ganz besonders bevorzugt ist es, wenn die Vertiefung oder der Fortsatz eine zylindrische Kontur aufweist; im Falle der Ausbildung der Formschlussmittel als Vertiefung eine innenzylindrische (Innen-)Umfangskontur und bei der Ausbildung als Axialfortsatz eine außenzylindrische (Außen-)Umfangskontur. Im Falle des Vorsehens einer Aussparung mit Innenkonusfläche ist es bevorzugt, wenn der Fortsatz die Mündungsöffnungen nicht in axialer Richtung überragt, sondern endet mit Axialabstand zu dieser innerhalb der Aussparung. Im Falle der Ausbildung des Gewindeelementes als ein ausschließlich in einer Umfangsrichtung betätigbares Gewindeelement ist es bevorzugt, wenn die Formschlussmittel nicht vollumfänglich zylindrisch konturiert sind, sondern lediglich einen zylindrisch konturierten Umfangsabschnitt aufweisen, d.h. teilzylindrisch konturiert sind. Bevorzugt ist die dieser teilzylindrisch konturierte Abschnitt in die einzige Betätigungsrichtung orientiert, so dass ausschließlich in Betätigungsrichtung ein Formschluss mit einem entsprechend konturierten Werkzeug herstellbar ist.

Besonders zweckmäßig ist es, wenn das Gewindeelement aus Metall, vorzugsweise aus Stahl, ausgebildet ist, um mit dem Gewindeelement große Lasten halten bzw. sichern zu können.

Ein wesentlicher Nachteil der aus der DE 101 36 546 A1 bekannten Schraube ist, dass diese nur kostenintensiv durch spanende Bearbeitung herstellbar ist, da die vordere zylindrische Aussparung und die hintere, die Formschlussmittel bildende Aussparung durch Bohren mit jeweils einem Zylinderbohrer eingebracht werden müssen. In Weiterbildung der vorliegenden Erfindung ist daher zur Verminderung dieses Nachteils mit Vorteil vorgesehen, dass das Gewindeelement als Pressformteil, vorzugsweise ohne jegliche spanende Bearbeitung, hergestellt ist. Ganz besonders bevorzugt ist das Gewindeelement durch Kaltfließpressen hergestellt. Die Herstellung der bekannten drehsicheren Schraube als Pressformteil aus Metall ist, u.a. aufgrund der Tatsache, dass die innere Aussparung unmittelbar an den Umfangsrand der vorderen Aussparung angrenzt, nicht möglich. Besonders zweckmäßig ist es daher, wenn bei dem hier vorgeschlagenen Gewindeelement die Formschlussmittel, insbesondere die Vertiefung bzw. der Fortsatz, vom unteren Umfangsrand der Innenumfangsfläche beabstandet sind. Anders ausgedrückt befinden sich die Formschlussmittel mit Vorteil in einem Bereich innerhalb des Aussparungsgrundes (Boden bzw. Grundfläche) der Aussparung, wobei ein Randabstand zum Aussparungsgrundrand eingehalten wird. Bei einer Ausführungsform, bei der anstelle der Aussparung mit Innenkonus ein Außenkonus vorgesehen ist, ist es bevorzugt, wenn die Formschlussmittel mit Abstand zum Außenrand der stirnseitigen Grundfläche angeordnet sind.

Im Falle des Vorsehens einer Rampe auf der von den Formschlussmitteln abgewandten Seite ist es bevorzugt, wenn diese vom Außenrand des Gewindeelementes beabstandet ist. Bevorzugt ist die Rampe gebildet vom Nutboden einer teilkreisringförmigen Nut. Denkbar ist auch eine Ausführungsvariante ohne Nut, bei der die Rampe radial innen von einer, vorzugsweise in Umfangsrichtung gekrümmten Seitenwand begrenzt ist und die vorzugsweise quer zu dieser Seitenwand orientierte, vorzugsweise bis zur Grundfläche abfallende Rampe bis zum Außenrand des Gewindeelementes reicht. Im Falle der Anordnung mindestens einer Rampe mit zugehörigen Formschlussmitteln auf dem zuvor beschriebenen, die Konusfläche in radialer Richtung nach außen überragenden Umfangsbund ist es bevorzugt, wenn die Formschlussmittel in radialer Richtung bis zum radial äußeren Rand des Gewindeelementes reichen.

Ganz besonders bevorzugt ist der Versatz zwischen einer Längsmittelachse der Formschlussmittel und der Längsmittelachse des Außengewindeelementes minimal und beträgt bevorzugt weniger als 2mm, noch weiter bevorzugt weniger als 1mm, noch weiter bevorzugt weniger als 0,5mm. Ganz besonders bevorzugt beträgt der vorgenannte Abstand zwischen etwa 0,1mm und 0,5mm. Besonders zweckmäßig ist es, wenn die Innenumfangsfläche der Aussparung über den größten Teil ihrer den Winkel α mit der Achse A einschließenden Axialerstreckung, vorzugsweise über mindestens 90% ihrer Axialerstreckung, als Innenkonusfläche bzw. Außenkonusfläche ausgebildet ist, um eine möglichst große Anlagefläche an einem korrespondierenden Außenkonus bzw. Innenkonus eines Werkzeugs zur Verfügung zu stellen. Besonders zweckmäßig ist es für den Fall des Vorsehens einer stirnseitigen Aussparung, wenn sich die Innenkonusfläche in axialer Richtung betrachtet bis zum Aussparungsgrund erstreckt.

Die Erfindung führt auch auf ein Werkzeug zum Festziehen eines wie zuvor beschrieben ausgebildeten Gewindeelementes. Das Werkzeug zeichnet sich durch einen Antriebsabschnitt aus, der komplementär, vorzugsweise formkongruent, zum Antrieb des Gewindeelementes ausgebildet ist. Somit umfasst der Antriebsabschnitt des Werkzeugs mindestens einen Außenkonusabschnitt und/oder einen Innenkonusabschnitt zum Zusammenwirken mit der innenkonusförmigen Innenumfangsfläche der Aussparung bzw. zum Zusammenwirken mit der außenkonusförmigen Außenumfangsfläche und zum Zusammenwirken mit den Formschlussmitteln des Gewindeelementes ausgebildete Werkzeugformschlussmittel, wobei der Außenkonusabschnitt bzw. Innenkonusabschnitt, d.h. der Gegenkonusabschnitt zur konischen Umfangsfläche des Gewindeelementes den gleichen Winkel mit einer zu dem Gegenkonus zentrischen Achse einschließt, wie die Umfangsfläche des Gewindeelementes mit der zugehörigen in Bezug auf die Umfangsfläche zentrischen Achse.

Hierbei handelt es sich im Falle der Ausbildung der Formschlussmittel des Gewindeelementes als Vertiefung um einen Axialfortsatz und im Falle der Ausbildung der Formschlussmittel als Fortsatz um eine korrespondierende, stirnseitige Vertiefung im Werkzeug.

Ganz besonders bevorzugt ist es, wenn das Werkzeug als Schraubautomat, also als Schraubroboter ausgebildet ist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1a:: eine Längsschnittansicht eines ersten Ausführungsbeispiels eines als Außengewindeelement ausgebildeten Gewindeelements, nicht gemäß der Erfindung nur zu Erläuterungszwecken,
- Fig. 1b:: eine Draufsicht auf eine Stirnseite eines nichterfindungsgemäßen Schraubenkopfes des Außengewindeelement gemäß Fig. 1a,
- Fig. 2a:: eine Längsschnittansicht einer zweiten Ausführungsform eines als Außengewindeelement ausgebildeten Gewindeelementes, nicht gemäß der Erfindung nur zu Erläuterungszwecken,
- Fig. 2b:: eine Draufsicht auf die Stirnseite eines Schraubenkopfes des Außengewindeelementes gemäß Fig. 2a,
- Fig. 3:: eine exemplarische Darstellung eines als Schraubautomat ausgebildeten Werkzeugs zum Zusammenwirken mit einem als Außengewindeelement ausgebildeten Gewindeelement, nicht gemäß der Erfindung nur zu Erläuterungszwecken,
- Fig. 4:: eine Längsschnittansicht eines dritten Ausführungsbeispiels eines als Außengewindeelement ausgebildeten Gewindeelementes, bei dem anstelle einer Innenkonusfläche eine Außenfläche vorgesehen ist, nicht gemäß der Erfindung nur zu Erläuterungszwecken,
- Fig. 5:: nur zu Erläuterungszwecken eine Längsschnittansicht eines vierten nicht gemäß der Erfindung ausgebildeten Ausführungsbeispiels eines als Außengewindeelement ausgebildeten Gewindeelements, bei dem sich die Formschlussmittel, ausgehend von einer Stirnseite (Grundfläche) des Außenkonus, in einer Richtung vom Schaft weg erstrecken,
- Fig. 6a:: eine ausschnittsweise Darstellung eines weiteren erfindungsgemäßen Ausführungsbeispiels eines Außengewindeelementes in einer Längsschnittansicht,
- Fig. 6b:: eine Draufsicht auf den Schraubenkopf des erfindungsgemäßen Außengewindeelementes gemäß Fig. 6a,
- Fig. 7:: ein Ausführungsbeispiel eines als Innengewindeelement ausgebildeten erfindungsgemäßen Gewindeelementes,
- Fig. 8:: eine ausschnittsweise Darstellung eines alternativen erfindungsgemäßen Außengewindeelementes in Längsschnittansicht,
- Fig. 9:: ein alternatives nicht erfindungsgemäßes Ausführungsbeispiel eines als Außengewindeelement ausgebildeten Gewindeelementes zu Erläuterungszwecken mit einer inversen Nut, umfassend eine als Rampe ausgebildete Stirnseite sowie eine die Formschlussmittel bildende, in Umfangsrichtung orientierte Wand,
- Fig. 10a und Fig. 10b:: unterschiedliche Ansichten eines alternativen, als Hutmutter mit Umfangsbund ausgebildeten erfindungsgemäßen Gewindeelementes,
- Fig. 11a und Fig. 11b:: zwei unterschiedliche Ansichten eines alternativen, als Kopfschraube mit Umfangsbund ausgebildeten erfindungsgemäßen Gewindeelementes,
- Fig. 12 und Fig. 13:: zu Erläuterungszwecken Beispiele von möglichen als Außengewindeelemente ausgebildeten nicht gemäß der Erfindung realisierten Außengewindeelementen bei denen der Innenkonus, sprich die konische Umfangsfläche nicht konzentrisch zur Längsmittelachse, sondern exzentrisch zu dieser angeordnet ist, wobei die Formschlussmittel ebenfalls exzentrisch zur Längsmittelachse L angeordnet sind (alternativ können die gezeigten Ausführungsbeispiele auch als Innengewindeelement ausgebildet sein),
- Fig. 14:: zu Erläuterungszwecken ein nicht erfindungsgemäßes als Innengewindeelement ausgebildetes Gewindeelement mit exzentrisch angeordneter Umfangsfläche und konzentrisch angeordneten Formschlussmitteln (das gezeigte Ausführungsbeispiel kann auch in Form eines Außengewindeelementes realisiert werden), und
- Fig. 15:: zu Erläuterungszwecken eine nicht erfindungsgemäße Ausführungsform eines Gewindeelementes als Außengewindeelement mit konzentrischer außenkonischer Umfangsfläche sowie exzentrisch angeordneten Formschlussmitteln (alternativ ist die Ausführungsvariante als Innengewindeelement und/oder mit konzentrisch zur Längsmittelachse L angeordneten Formschlussmitteln realisierbar).

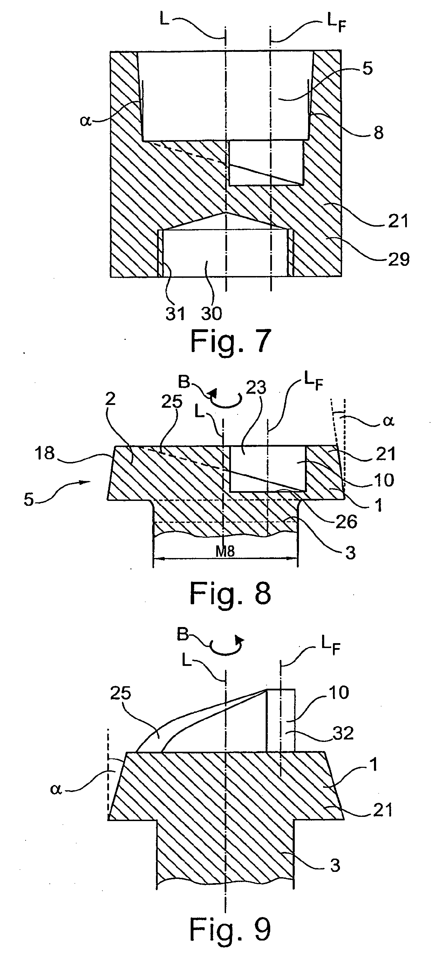

In den Figuren sind gleiche Elemente und Elemente mit der gleichen Funktion mit den gleichen Bezugszeichen gekennzeichnet. An dieser Stelle sei angemerkt, dass die als Außengewindeelemente ausgebildeten Ausführungsbeispiele auch als Innengewindeelement ausgebildet werden können und das als Innengewindelement ausgebildete Ausführungsbeispiel gemäß Fig. 7 auch als Außengewindeelement realisiert werden kann. Ferner sei angemerkt, dass die in den einzelnen Ausführungsbeispielen offenbarten Merkmale beliebig zu neuen Ausführungsbeispielen kombinierbar sein sollen. Darüber hinaus sei angemerkt, dass die als Millimeterangaben dargestellten Abmessungen als wesentlich offenbart gelten sollen, dergestalt, dass die Abmessungen und sich aus den Abmessungen ergebende Abmessungsverhältnisse beanspruchbar sein sollen. Die in den Figuren dargestellten Abmessungen sollen die sich aus den Ansprüchen ergebende Erfindung jedoch nicht beschränken, d.h. sind auch andere Abmessungen realisierbar. Ganz wesentlich ist, dass in den Zeichnungen zur besseren Verdeutlichung der Winkel α, der eingeschlossen wird zwischen der konischen Umfangsfläche und einer dieser zugeordneten zentrischen Achse aus Gründen der Übersichtlichkeit wesentlich größer dargestellt ist. In Realität beträgt dieser Winkel α weniger als 10°, vorzugsweise weit weniger als 10°.

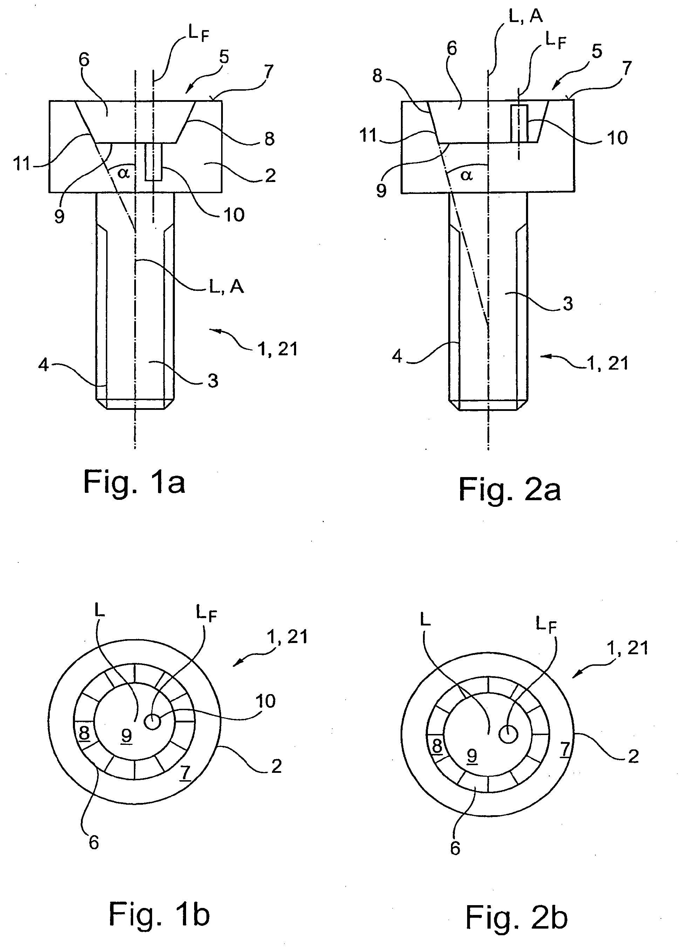

In den Fig. 1a und 1b ist ein als Kopfschraube ausgebildetes Außengewindeelement 1 (Gewindeelement 21) gezeigt. Dieses umfasst einen Kopf 2 sowie einen an den Kopf 2 axial angrenzenden Schaft 3 mit Außengewinde 4.

Innerhalb des Kopfes 2 befindet sich ein Antrieb 5, der im Wesentlichen zwei Axialabschnitte umfasst, nämlich eine vordere Aussparung 6, die sich in axialer Richtung ausgehend von einer Oberseite 7 in Richtung Schaft 3 erstreckt, wobei die Aussparung 6 eine Innenumfangsfläche 8 (Umfangsfläche) aufweist, die innenkonusförmig konturiert ist und konzentrisch zu einer Längsmittelachse L des Außengewindeelementes 1 angeordnet ist. Die Aussparung 6 und in dem gezeigten Ausführungsbeispiel auch die innenkonusförmige Ausformung der Innenumfangsfläche 8 endet axial an einem ebenen Aussparungsgrund 9 (Grundfläche), ausgehend von dem sich in axialer Richtung Formschlussmittel 10 erstrecken. Diese sind in dem gezeigten Ausführungsbeispiel als bohrungsartige Vertiefung ausgebildet. Zu erkennen ist, dass die Formschlussmittel 10 eine Formschlussmittellängsmittelachse L_{F} aufweisen, die exzentrisch zur Längsmittelachse L des Außengewindeelementes 1 angeordnet ist. In dem gezeigten Ausführungsbeispiel sind die Formschlussmittel 10 übertrieben weit von der Längsmittelachse L beabstandet eingezeichnet. Wie in Fig. 1 a zu erkenn ist, schließt die innenkonische Umfangsfläche 8 mit einer Achse A, die in dem gezeigten Ausführungsbeispiel mit der Längsmittelachse L zusammenfällt einen Winkel α ein. Dieser beträgt in dem gezeigten Ausführungsbeispiel 1,3°.

Bevorzugt ist eine Ausführungsvariante (nicht dargestellt), bei der die Längsmittelachse L mit Abstand zur Formschlussmittellängsmittelachse L_{F} die Formschlussmittel 10 in axialer Richtung durchsetzt.

Zu erkennen ist, dass die Formschlussmittel 10 mit Radialabschnitt zum unteren Umfangsrand 11 der Innenumfangsfläche 8 beabstandet angeordnet sind. Der Umfangsrand 11 der Innenumfangsfläche 8 fällt zusammen mit dem radial äußeren Umfangsrand des Aussparungsgrundes 9.

Bei dem Außengewindeelement 1 handelt es sich um ein durch Kaltfließpressen hergestelltes Formpressteil.

Fig. 1b zeigt das Außengewindeelement 1 (Gewindeelement 21) gemäß Fig. 1a in einer Ansicht von oben auf die Oberseite 7 des Kopfes 2. Zu erkennen ist die ringförmige Oberseite 7, die radial innen in die innenkonusförmig konturierte Aussparung 6 übergeht, wobei die innenkonische Innenumfangsfläche 8 der Aussparung 6 in axialer Richtung betrachtet endet am Aussparungsgrund 9, in den die Formschlussmittel 10 als Vertiefung eingebracht sind.

Fig. 2a und 2b zeigen ein alternatives Ausführungsbeispiel, wobei zur Vermeidung von Wiederholungen im Wesentlichen nur auf die Unterschiede zu dem Ausführungsbeispiel gemäß Fig. 1a und 1b eingegangen wird. Im Hinblick auf die Gemeinsamkeiten wird auf Fig. 1 a und 1 b mit zugehöriger Beschreibung verwiesen.

Im Gegensatz zu dem zuvor beschriebenen Ausführungsbeispiel sind die Formschlussmittel 10 nicht als sich in den Kopf 2 hinein Richtung Schaft 3, d.h. in Einschraubrichtung erstreckende Vertiefung, sondern als zylindrischer Axialfortsatz ausgebildet, der sich ausgehend vom Aussparungsgrund 9 in axialer Richtung Richtung Oberseite 7, d.h. entgegen der Einschraubrichtung bzw. in Richtung hinteren Endes erstreckt und mit Axialabstand zu dieser Oberseite 7 endet. Auch bei dem Ausführungsbeispiel gemäß den Fig. 2a und 2b ist die Formschlusmittellängsmittelachse L_{F} radial beabstandet, d.h. versetzt bzw. exzentrisch angeordnet zur Längsmittelachse L des Außengewindeelementes 1 (Gewindeelement 21). Wie in Fig. 2a zu erkennen ist, schließt die innenkonische Umfangsfläche 8 mit einer Achse A, zu der sie konzentrisch angeordnet ist und die in dem gezeigten Ausführungsbeispiel mit der Längsmittelachse L zusammenfällt einen Winkel α ein, der in dem gezeigten Ausführungsbeispiel 1,4° beträgt.

!!! Bei dem Winkel α handelt es sich also um den halben Konuswinkel der innen- oder außenkonischen Umfangsfläche.

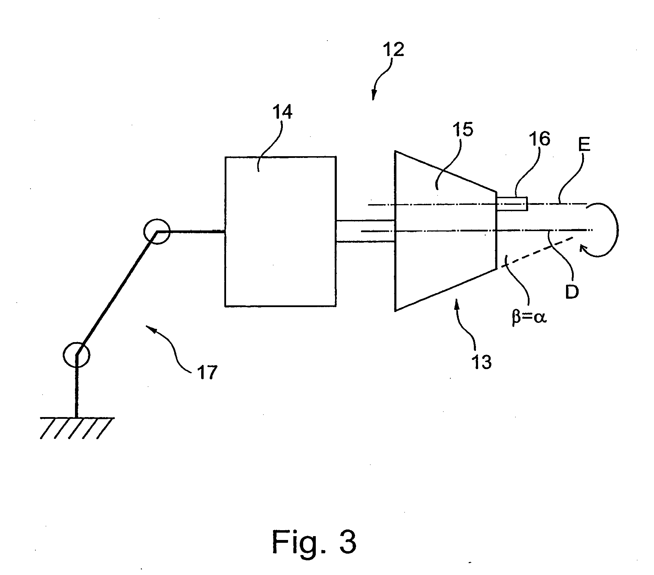

Fig. 3 zeigt ein als Schraubautomat ausgebildetes Werkzeug 12 zum Zusammenwirken mit dem in den Fig. 1a und Fig. 1b gezeigten Außengewindeelement 1 (Gewindeelement 21). Das Werkzeug 12 umfasst einen Antriebsabschnitt 13, der um eine Drehachse D rotierbar mittels eines Elektromotors 14 antreibbar ist. Der Antriebsabschnitt 13 besteht aus einem Außenkonusabschnitt 15 (Gegenkonusabschnitt), der formkomplementär zur innenkonusförmigen Innenumfangsfläche der Aussparung 6 des Außengewindeelementes 1 gemäß den Fig. 1 a und 1 b ausgebildet ist. Exzentrisch zur Drehachse D des Außenkonusabschnittes 15 befinden sich Werkzeugformschlussmittel 16 in der Form eines zylindrischen Bolzens, dessen Achse B seitlich versetzt ist zur Drehachse D. Die Werkzeugformschlussmittel 16 sind formkomplementär zu den Formschlussmitteln 10 des Außengewindeelementes 1 ausgebildet. Lediglich exemplarisch ist aus Fig. 3 zu sehen, dass das als Schraubautomat ausgebildete Werkzeug 12 einen Roboterarm 17 mit mehreren Schwenkgelenken umfasst. Wie sich aus Fig. 3 ergibt, schließt der Außenkonusabschnitt 15 (Gegenkonusabschnitt), genauer seine Konusfläche mit der Drehachse D einen Winkel β ein, der weniger als 10° betragen muss. Der Winkel β soll dem Winkel α des zu betätigenden Gewindeelementes entsprechen, also dem Winkel, den die in diesem Fall innenkonische Umfangsfläche 8 des Gewindeelementes mit der zugehörigen Achse A einschließt.

Auf die separate Darstellung eines zu dem Außengewindeelement 1 gemäß den Fig. 2a und 2b korrespondierenden Werkzeugs 12 wurde verzichtet, da dieses sich ausschließlich dahingehend von dem in Fig. 3 gezeigten Werkzeug 12 unterscheiden muss, als dass die Werkzeugformschlussmittel 16 nicht als Axialfortsatz, sondern als Vertiefung innerhalb des Außenkonusabschnittes 15 ausgebildet sind, die mit den Formschlussmitteln 10 gemäß den Fig. 2a und 2b korrespondiert.

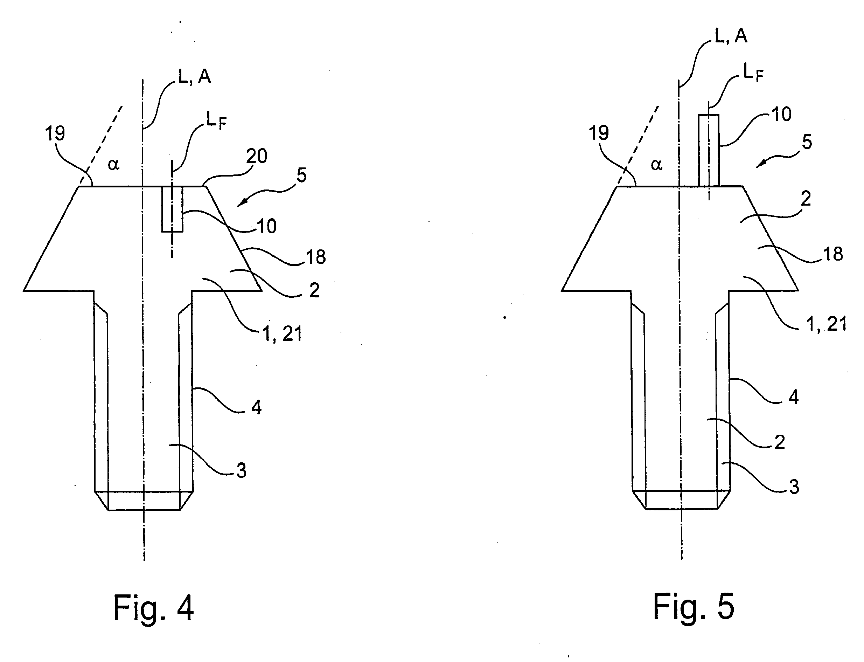

Im Folgenden werden anhand der Fig. 4 und 5 zwei weitere Ausführungsbeispiele beschrieben, die im Unterschied zu den in den Fig. 1a, 1b, 2a und 2b dargestellten Ausführungsbeispielen nicht eine Innenkonusfläche, sondern eine Außenkonusfläche 18 aufweisen. Auf das Vorsehen einer Aussparung mit Innenkonusfläche wurde verzichtet, wobei diese bei Bedarf zusätzlich vorgesehen werden kann. Da im Folgenden, zur Vermeidung von Wiederholungen im Wesentlichen Unterschiede zu den vorangehenden Ausführungsbeispielen erläutert werden, wird im Hinblick auf die Gemeinsamkeiten auf die Fig. 1a bis 2b mit zugehöriger Beschreibung verwiesen.

Das in Fig. 4 gezeigte Außengewindeelement 1 (Gewindeelement 21) ist als Kopfschraube ausgebildet, deren Kopf 2 mit einer einen Teil des Antriebs 5 bildenden Außenkonusfläche 18 (Umfangsfläche) versehen ist. Die Außenkonusfläche 18 erstreckt sich über die gesamte Axialerstreckung des Kopfes 2 und dient zum Zusammenwirken mit einem innenkonusförmigen Gegenkonusabschnitt eines nicht dargestellten, vom Grundsatz her analog zu dem in Fig. 3 gezeigten Ausführungsbeispiel ausgebildeten Werkzeug. An dem Kopf 2 schließt in axialer Richtung ein Schaft 3 mit Außengewinde 4 an.

Zu erkennen ist, dass die Außenkonusfläche 18 konzentrisch zur Längsmittelachse L des Außengewindeelementes 1 angeordnet ist. Parallel zur Längsmittelachse L verläuft eine Formschlussmittellängsmittelachse L_{F}. Die Formschlussmittel 10 sind in dem gezeigten Ausführungsbeispiel als exzentrisch zur Längsmittelachse L angeordnete Vertiefung innerhalb des Kopfes 2 ausgebildet. Zu erkennen ist, dass sich die Formschlussmittel 10, ausgehend von einer oberen Stirnfläche bzw. Stirnseite 19 (Grundfläche), in axialer Richtung erstrecken. Die Formschlussmittel 10 sind über ihre gesamte Axialerstreckung radial beabstandet von der Außenkonusfläche 18. Insbesondere sind die innerhalb der Stirnseite 19 angeordneten Formschlussmittel 10 mit Randabstand zu einem oberen Umfangsrand 20 der Stirnseite 19 angeordnet, wobei dieser Umfangsrand 20 gleichzeitig den oberen Umfangsrand der Außenkonusfläche 18 bildet. Zu erkennen ist, dass die Außenkonusfläche 18 mit der Achse A, die mit der Längsmittelachse L zusammenfällt einen Winkel α von dem gezeigten Ausführungsbeispiel etwa 1,1° einschließt.

Das in Fig. 5 gezeigte Ausführungsbeispiel unterscheidet sich von dem in Fig. 4 gezeigten Ausführungsbeispiel lediglich dadurch, dass die Formschlussmittel 10 nicht als Vertiefung, sondern als axialer Fortsatz ausgebildet sind, der sich ausgehend von der Grundfläche (Stirnseite 19) in axialer Richtung von dem Schaft 3 erstreckt, wobei die Formschlussmittellängsmittelachse L_{F} parallel zur Längsmittelachse L des Außengewindeelementes 1 (Gewindeelement 21) angeordnet ist. Zu erkennen ist, dass die Außenkonusfläche 18 mit der Achse A, die in dem gezeigten Ausführungsbeispiel mit der Längsmittelachse L zusammenfällt einen Winkel α von beispielsweise 1,5° einschließt.

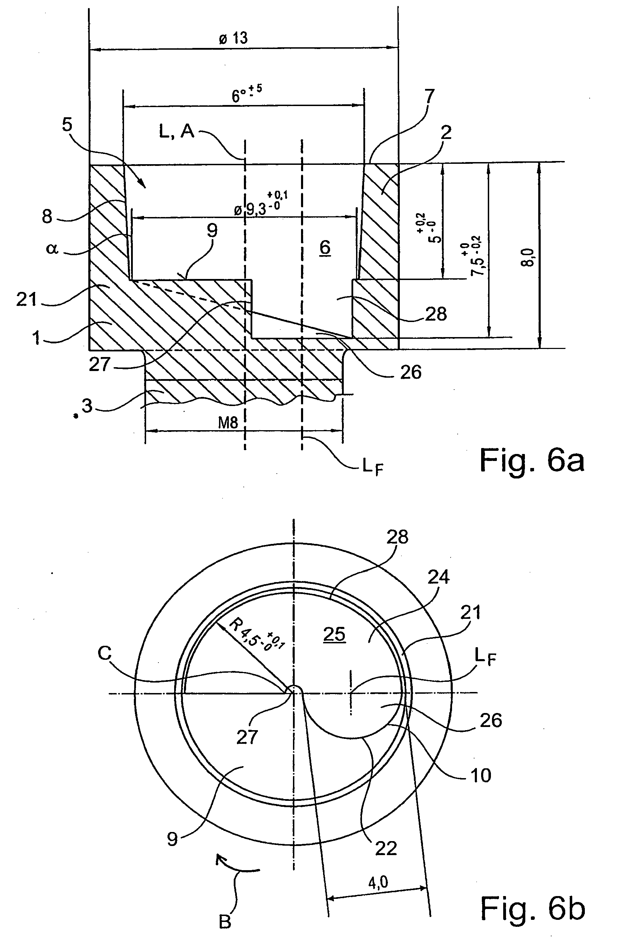

In den Fig. 6a bis 8 ist zudem zu erkennen, dass die innen- oder außenkonische Umfangsfläche 8, 18 mit der Achse A einen Winkel α einschließt, der wie bei den vorherstehenden Ausführungsbeispielen so bemessen sein muss, dass eine Verbindung dieser Umfangsfläche mit einem entsprechenden Gegenkonus zumindest das Eigengewicht des Gewindeelementes sicher trägt bzw. hält.

Bei den in den Fig. 6a bis Fig. 8 dargestellten Ausführungsbeispielen von Gewindeelementen handelt es sich um ausschließlich in einer einzigen Betätigungsrichtung B, hier in Festziehrichtung betätigbare Gewindeelemente. Allen diesen Ausführungsbeispielen ist gemein, dass mit den exzentrisch zur Längsmittelachse angeordneten Formschlussmitteln ausschließlich in die Betätigungsrichtung ein Formschluss herstellbar ist - entgegen dieser einzigen Betätigungsrichtung ist kein Formschluss herstellbar. Dies ist bei sämtlichen Ausführungsbeispielen dadurch realisiert, dass die Formschlussmittel über eine Rampe (Schräge) erreichbar sind, die sich ausgehend von den Formschlussmitteln entgegen der Betätigungsrichtung B erstreckt.

In Fig. 6a ist der obere Teil eines als Außengewindeelement 1 ausgebildeten Gewindeelementes 21 gezeigt. Das Gewindeelement 21 umfasst einen Kopf 2, an welchem in axialer Richtung ein nur abschnittsweise dargestellter Schaft 3 angeordnet ist, an dem ein nicht dargestelltes Außengewinde vorgesehen ist. Innerhalb des Kopfes 2 befindet sich ein Antrieb 5, der zwei Axialabschnitte umfasst, nämlich eine vordere Aussparung 6, die sich in axialer Richtung ausgehend von einer Oberseite 7 in Richtung Schaft 3 erstreckt, wobei die Aussparung 6 eine Innenumfangsfläche 8 (Umfangsfläche) aufweist, die innenkonusförmig konturiert ist und konzentrisch zu einer Längsmittelachse L des Gewindeelementes 21 angeordnet ist. Die Aussparung 6 und in dem gezeigten Ausführungsbeispiel auch die innenkonusförmige Ausformung der Innenumfangsfläche 8 endet axial an einem ebenen Aussparungsgrund 9 (Grundfläche), ausgehend von dem sich in axialer Richtung Formschlussmittel 10 erstrecken (vgl. Fig. 6b). Diese sind in dem gezeigten Ausführungsbeispiel als Vertiefung ausgebildet, genauer als in eine einzige Betätigungsrichtung B orientierte, bzw. sich radial erstreckende Nutwand 22. Zu erkennen ist die zylindrische Konturierung der Nutwand 22. Die Formschlussmittel 10 begrenzen also eine teilkreisringförmig konturierte Nut 23 in die Umfangsrichtung (Betätigungsrichtung B), in die das Gewindeelement 21 betätigbar ist. Die Nut 23 weist einen Nutboden 24 auf, der als Rampe 25, also als Schräge ausgebildet ist, die ausgehend von dem Aussparungsgrund 9 der oberen Aussparung 6 bis zum Grund der Vertiefung 26 bzw. bis zum Grund der Formschlussmittel 10, d.h. in dem gezeigten Ausführungsbeispiel bis zum Grund der Nutwand 22 verläuft. Der Nutboden 24 und damit die Rampe 25 ist stufenlos ausgebildet und steigt stetig, ausgehend vom Grund der Nutwand 22 an bis auf das Niveau einer höheren, vom Aussparungsgrund 9 gebildeten Ebene.

In dem gezeigten Ausführungsbeispiel wird die Nut 23 radial innen von einer inneren, gekrümmten Seitenwand 27 und radial außen von einer konzentrisch dazu angeordneten äußeren Seitenwand 28 begrenzt. Bei einer alternativen, nicht gezeigten Ausführungsvariante kann auf die äußere Seitenwand 28 verzichtet werden, beispielsweise wenn die Rampe 25 bis zum Außenumfang des Kopfes 2 reicht. Auch müssen die äußere und/oder die innere Seitenwand 27, 28 nicht konzentrisch zueinander verlaufend ausgebildet sein, wobei die gezeigte, konzentrische Ausbildung bevorzugt ist.

Wie sich aus einer Zusammenschau der Fig. 6a und 6b ergibt, sind also die Formschlussmittel 22 für entsprechende Gegenformschlussmittel (hier ein axialer Fortsatz) eines beispielhaft in Fig. 3 dargestellten Werkzeugs lediglich über die Rampe 25 zugänglich, d.h. die Gegenformschlussmittel gleiten, für den Fall, dass das Werkzeug nicht in Umfangsrichtung exakt positioniert wird entlang der Rampe 25 in Umfangsrichtung bis gegen die Formschlussmittel 10 bzw. die Nutwand 22, wo dann ein Formschluss resultiert und das Gewindeelement 21 in Umfangsrichtung, hier in die einzige Betätigungsrichtung B mitgenommen wird. Wird mit dem, beispielsweise in Fig. 3 gezeigten Werkzeug versucht das Gewindeelement 21 zu lösen, so gelingt dies nicht, da kein Formschluss zwischen dem Werkzeug und den Formschlussmitteln 10 realisierbar ist - stattdessen gleiten die Gegenformschlussmittel des Werkzeugs in Umfangsrichtung entlang der Rampe 25 bis auf den Aussparungsgrund 9 und fallen axial bei Weiterbetätigung des Werkzeugs in Umfangrichtung wieder auf den Grund der Vertiefung 26 ab, um dann wieder entlang der Rampe 25 anzusteigen.

Aus Fig. 6a und 6b ergibt sich, dass die Längsachse L_{F} des Formschlussmittel exzentrisch, also radial versetzt zur Längsachse L des Gewindeelementes 21 angeordnet ist.

Bei dem Gewindeelement 21 gemäß den Fig. 6a und 6b handelt es sich um ein durch Kaltfließpressen hergestelltes Formpressteil.

Bei dem Ausführungsbeispiel gemäß Fig. 7 handelt es sich bei dem Gewindeelement 21 um ein Innengewindeelement 29. Der Aufbau des Antriebs entspricht dem in den Fig. 6a und 6b dargestellten Antrieb 5. Das Gewindeelement 21 weist lediglich keinen Schaft auf, sondern ist mit einem stirnseitigen, auf der vom Antrieb 5 abgewandten Seite angeordneten Sackloch 30 (Innengewindeloch) mit Innengewinde 31 versehen. Das Innengewindeelement 29 ist wie das Außengewindeelement 1 gemäß den Fig. 6a und 6b lediglich in einer einzigen Betätigungsrichtung B betätigbar.

In Fig. 8 ist ein alternatives Ausführungsbeispiel eines als Außengewindeelement 1 ausgebildeten Gewindeelementes 21 gezeigt. Im Gegensatz zu den Ausführungsbeispielen gemäß Fig. 6a, 6b und 7 umfasst der Antrieb 5 nicht einen Innenkonus, sondern einen Außenkonusabschnitt 15, der in dem gezeigten Ausführungsbeispiel am Außenumfang eines Kopfes 2 ausgebildet ist. Selbstverständlich ist das Ausführungsbeispiel gemäß Fig. 8 alternativ auch als Innengewindeelement realisierbar. Die obere Stirnseite des Kopfes 2 bildet die Grundfläche, ausgehend von der sich in axialer Richtung die Formschlussmittel 10 erstrecken, die analog zu den Ausführungsbeispielen gemäß den Fig. 6a, 6b und 7 ausgebildet sind. Die innerhalb einer Nut 23 ausgebildete Rampe 25 verbindet stufenlos die Stirnseite (Grundfläche) mit der Vertiefung 26 bzw. dem Grund der Formschlussmittel 10, die ausschließlich in einer einzigen Betätigungsrichtung wirkend ausgebildet sind.

Fig. 9 zeigt ein weiteres alternatives Ausführungsbeispiel eines als Außengewindeelement 1 ausgebildeten Gewindeelementes 21, wobei das Gewindeelement 21 alternativ auch als Innengewindeelement ausgebildet sein kann. Die Formschlussmittel 10 sind quasi invers zu dem Ausführungsbeispiel gemäß Fig. 8 ausgebildet. Dies bedeutet, dass die Formschlussmittel 10 als sich von dem Schaft 3 weg erstreckender Fortsatz ausgebildet sind bzw. die Formschlussmittel 10 eine in Umfangsrichtung orientierte Wand 32 eines Teilkreiszylinderfortsatzes bilden, der eine schräge, von der Rampe 25 gebildete Stirnseite aufweist, welche die Grundfläche (Stirnseite) des Kopfes mit der Stirnseite des Fortsatzes bzw. der Formschlussmittel 10 verbindet.

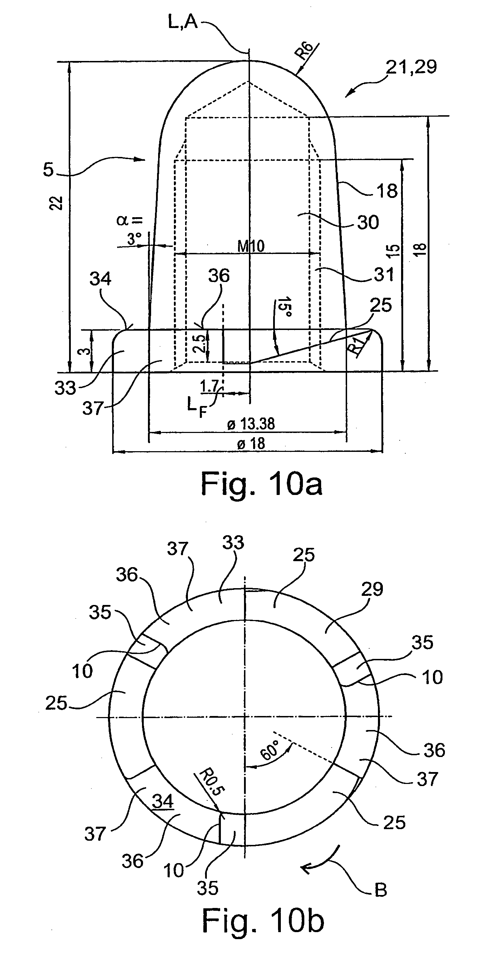

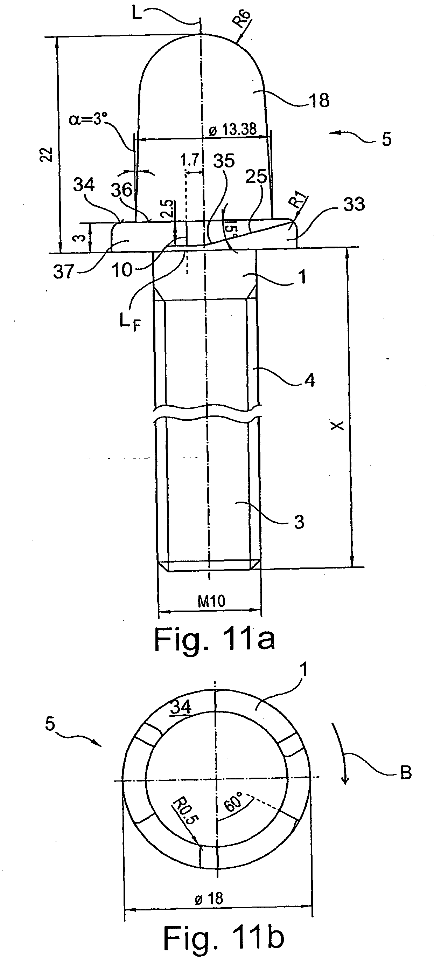

In den Fig. 10a und 10b sowie 11a und 11b sind weitere alternative Ausführungsbeispiele von Gewindeelementen gezeigt, die wie die Ausführungsbeispiele gemäß den Fig. 6a bis 8a gezeigt, ausschließlich in einer einzigen Betätigungsrichtung B, auch hier in Festziehrichtung, d.h. in Einschraubrichtung betätigbar sind. Allen diesen Ausführungsbeispielen ist gemein, dass mit den exzentrisch zur Längsmittelachse, auf einem Umfangsbund angeordneten Formschlussmitteln ausschließlich in die Betätigungsrichtung ein Formschluss herstellbar ist - entgegen dieser einzigen Betätigungsrichtung ist kein Formschluss erzielbar. Dies ist bei sämtlichen mit Ausführungsbeispielen mit Vorteil dadurch realisiert, dass die vorzugsweise mehreren Formschlussmittel jeweils über eine diesen zugeordnete Rampe (Schräge) erreichbar sind, die sich ausgehend von den Formschlussmitteln entgegen der Betätigungsrichtung B erstreckt.

In den Fig. 10a und 10b ist ein als Hutmutter ausgebildetes Gewindeelemente 21 gezeigt und zwar in Fig. 10a in einer Seitenansicht und in Fig. 10b in einer Draufsicht von hinten. Das Gewindeelement 21 umfasst einen Körper der stirnseitig (rückseitig) im Wesentlichen halbrund, hier mit einem Radius R6 ausgebildet ist. Diese halbrunde Stirnseite geht über in eine Außenkonusfläche 18, die sich unterhalb der abgerundeten Stirnseite befindet und die Bestandteil eines Antriebs 5 ist. Neben der Außenkonusfläche 18 umfasst der Antrieb 5, in dem gezeigten Ausführungsbeispiel drei, Formschlussmittel 10, die derart ausgebildet und angeordnet sind, dass das als Innengewindeelement 29 ausgebildete Gewindeelement 21 ausschließlich in eine Betätigungsrichtung B, hier in Festziehanfangsrichtung betätigbar ist.

Die Außenkonusfläche 18 ist konzentrisch zu einer Längsmittelachse L des Gewindeelementes angeordnet. Exzentrisch zu dieser Längsachse L sind die Längsachsen L_{F} der Formschlussmittel 10 angeordnet.

Der axial vordere, in der Zeichnungsebene untere Bereich des Körpers ist gebildet von einem Umfangsbund 33 (Umfangsring), welcher die Außenkonusfläche 18 in radialer Richtung nach außen überragt. Der Umfangsbund 33 ist Träger der Formschlussmittel 10 und von den Formschlussmitteln 10 zugeordneten Rampen 25, welche sich ausgehend von den diesen zugeordneten Formschlussmitteln 10 entgegen der Betätigungsrichtung B erstrecken bzw. entgegen der Betätigungsrichtung B entgegen der axialen Einschraubrichtung, d.h. in Fig. 10a in der Zeichnungsebene nach oben ansteigen.

Die Rampen 25 sowie die diesen zugeordneten Formschlussmittel 10 sind gleichmäßig in Umfangsrichtung verteilt angeordnet und zwar auf einer entgegen der axialen Einschraubrichtung orientierten Stirnseite 34 des Umfangsbundes 33. Die Stirnseite 34 weist eine ringförmige, gestufte Oberflächenkontur auf, die im Wesentlichen gebildet ist von den Formschlussmitteln 10, den Rampen 25, später noch zu erläuternden Grundflächen 35 sowie in einer Parallelebene zu den Grundflächen 35 angeordneten Oberseiten 36 von axialen Fortsätzen 37, die in eine Umfangsrichtung und zwar entgegen der Betätigungsrichtung B von den als axiale Wand ausgebildeten Formschlussmitteln und in Betätigungsrichtung B von jeweils einer Rampe 25 begrenzt sind, welche den in Betätigungsrichtung B benachbarten Formschlussmitteln 10 zugeordnet ist.

Zu erkennen ist, dass sich die als sowohl axial als auch radial erstreckende Wand ausgebildeten Formschlussmittel 10 ausgehend von der Grundfläche 35 entgegen der axialen Einschraubrichtung erstrecken. Die zugeordnete Rampe 25 führt axial bis auf die Grundfläche 35. Zu erkennen ist die stufenlose, d.h. stetig ausgeformte Rampe 25. Die Rampe 25 könnte sich alternativ in Umfangsrichtung auch bis unmittelbar die Formschlussmittel 10 erstrecken. In diesem Fall würde die Grundfläche vom untersten Ende der Rampe 25 gebildet.

Die Rampen 25 verlaufen entgegen der Betätigungsrichtung B ausgehend von der Grundfläche 35 bis auf die zugehörige d.h. entgegen der Betätigungsrichtung B benachbarte Oberseite des zugehörigen Fortsatzes 35.

Wie sich aus einer Zusammenschau der Fig. 10a und 10b ergibt, sind also die Formschlussmittel 10 für entsprechende Gegenformschlussmittel (hier ein axialer Fortsatz) eines nicht dargestellten Werkzeugs lediglich über die zugehörige Rampe 25 zugänglich, d.h. die Gegenformschlussmittel gleiten, für den Fall dass das Werkzeug nicht in Umfangsrichtung exakt positioniert wird entlang der Rampe 25 in Umfangsrichtung bis gegen die Formschlussmittel 10 bzw. in Umfangsrichtung gegen den entsprechenden Fortsatz 37, wo dann ein Formschluss resultiert und das Gewindeelement 21 in Umfangsrichtung, hier in die einzige Betätigungsrichtung B mitgenommen wird. Wird mit dem nicht dargestellten Werkzeug versucht, das Gewindeelement 21 zu lösen, so gelingt dies nicht, da kein Formschluss in Umfangsrichtung zwischen dem Werkzeug und den Formschlussmitteln 10 realisierbar ist - stattdessen gleiten die Gegenformschlussmittel des Werkzeugs in Umfangsrichtung entlang den Rampen 25 bis auf die benachbarten Oberseiten der zugehörigen Fortsätze 37 und fallen axial bei Weiterbetätigung des Werkzeugs entgegen der Betätigungsrichtung B wieder auf die nächste Grundfläche 35 ab um dann wieder entlang der Rampen 25 anzusteigen.

Bei dem Ausführungsbeispiel gemäß den Fig. 11a und 11b handelt es sich bei dem Gewindeelement 21 um ein Außengewindeelement 1. Der Aufbau des Antriebs 5 entspricht dem in den Fig. 10a und 10b dargestellten Antrieb 5, so dass zur Vermeidung von Wiederholungen auf die entsprechende Figurenbeschreibung zu den Fig. 10a und 10b verwiesen wird. Das Gewindeelement 21 weist lediglich kein Sackloch auf, sondern stattdessen einen Schaft 3, der mit einem Außengewinde 4 versehen ist. Das Außengewindeelement 1 ist wie das Innengewindeelement 29 gemäß den Fig. 10a und 10b lediglich in einer einzigen Betätigungsrichtung B betätigbar. Zu erkennen ist, dass als Konusabschnitt bzw. als Konusfläche eine Außenkonusfläche vorgesehen ist, wobei bei den Ausführungsbeispielen gemäß den Fig. 10a bis 11b alternativ theoretisch auch eine Innenkonusfläche vorgesehen sein kann. Wesentlich bei diesen Ausführungsbeispielen ist lediglich, dass ein Umfangsbund 33 vorgesehen ist, der die entsprechende Konusfläche in radialer Richtung nach außen überragt.

Auch bei den Ausführungsbeispielen gemäß den Fig. 9 bis 11b ist sichergestellt, dass die innen- oder außenkonische Umfangsfläche 8, die bei den gezeigten Ausführungsbeispielen mit der Längsmittelachse L zusammenfällt, jedoch denkbar auch von dieser beabstandet und parallel dazu platziert ist einen Winkel α einschließt, der so bemessen ist, dass bei einer Verbindung der Umfangsfläche mit einer entsprechenden Gegenkonusfläche zumindest das Eigengewicht, vorzugsweise ein vielfaches des Eigengewichtes ohne zusätzliche Hilfsmittel gehalten wird. Der Winkel α beträgt beispielsweise 1,4°.

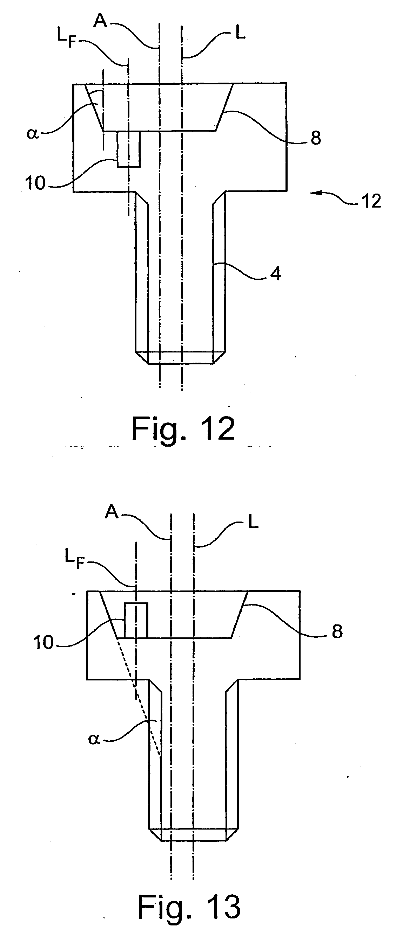

Bei dem Ausführungsbeispiel gemäß Fig. 12 ist die als Innenumfangsfläche 8 ausgebildete (konische) Umfangsfläche nicht wie bei den voranstehenden Ausführungsbeispielen konzentrisch zur Längsmittelachse L des Gewindeelementes bzw. des Gewindes angeordnet, sondern exzentrisch zu dieser. Folglich fallen die Achse A, zu der die Innenumfangsfläche 8 konzentrisch angeordnet ist und die Längsmittelachse L auseinander bzw. sind voneinander beabstandet und parallel zueinander orientiert. Die sich in axialer Richtung erstreckenden Formschlussmittel 10, die hier als Vertiefung ausgebildet sind, weisen eine Längsmittelachse L_{F} auf, die parallel und beabstandet zur Achse A und auch zur Längsmittelachse L angeordnet ist. Denkbar ist auch eine konzentrische Anordnung in Bezug auf die Längsmittelachse L.

Bei einer alternativen, nicht dargestellten Ausführungsvariante kann das Außengewindeelement 1 gemäß Fig. 12 selbstverständlich auch als Innengewindeelement ausgebildet werden.

Das Ausführungsbeispiel gemäß Fig. 13 entspricht im Wesentlichen dem Ausführungsbeispiel gemäß Fig. 12 mit dem einzigen Unterschied, dass die Formschlussmittel als axialer Fortsatz und nicht als Vertiefung ausgebildet sind. Die innere Umfangsfläche 8 schließt wie bei dem voranstehenden Ausführungsbeispiel mit der Achse A einen Winkel α, von beispielsweise 1,3° ein. Zu erkennen ist auch hier die exzentrische Anordnung der Formschlussmittel in Bezug auf die Achse A, wobei eine konzentrische Anordnung zur Achse L alternativ realisierbar ist. Selbstverständlich kann das Ausführungsbeispiel gemäß Fig. 13 in einer Abwandlung auch als Innengewindeelement ausgebildet werden.

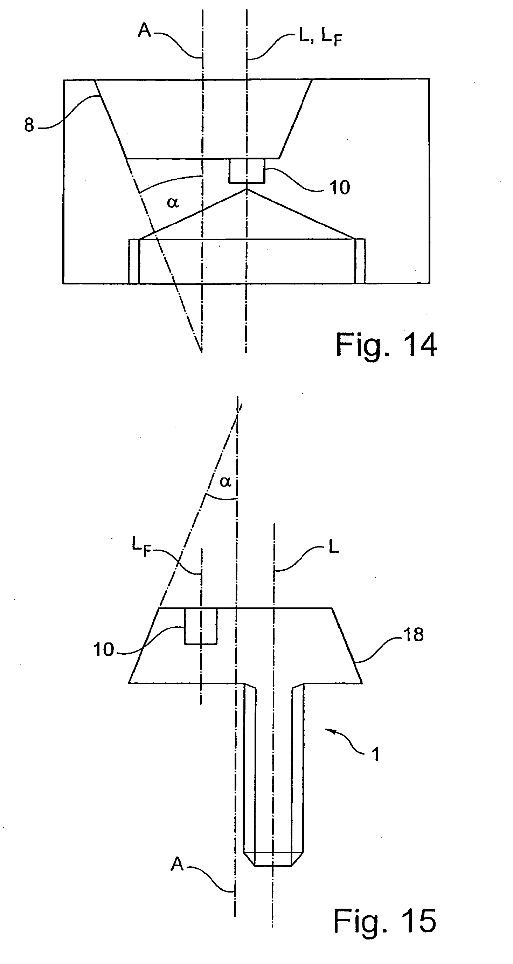

Bei dem Ausführungsbeispiel gemäß Fig. 14 ist zwischen der inneren, als Innenkonusfläche ausgebildeten Umfangsfläche 8 und der Achse A ein Winkel α von beispielsweise 1,3° realisiert. Die Achse A läuft parallel zur Längsmittelachse L, welche in dem gezeigten Ausführungsbeispiel mit der Längsmittelachse L_{F} der Formschlussmittel 10 zusammenfällt, die als axiale Vertiefung ausgebildet sind. Die Längsmittelachse L wird dabei definiert von dem Gewinde (Innengewinde), welches konzentrisch angeordnet ist zur Längsmittelachse L. Das Ausführungsbeispiel gemäß Fig. 14 kann alternativ auch als Außengewindeelement realisiert werden.

Das Ausführungsbeispiel gemäß Fig. 15 zeigt ein Außengewindeelement 1, bei welchem die außenkonische Umfangsfläche 18 nicht konzentrisch, sondern exzentrisch zur Längsmittelachse L des Gewindeelementes 1 angeordnet ist. Dabei ist folglich die Achse A zu der die umfangsgeschlossene Außenkonusfläche 18 konzentrisch angeordnet ist von der Längsmittelachse L beabstandet und verläuft zu dieser parallel. Ebenso beabstandet zur Längsmittelachse L als auch zur Achse A verläuft die Längsmittelachse L_{F} der als Vertiefung (alternativ axialer Fortsatz) ausgebildeten einzigen Formschlussmittel 10, die alternativ auch konzentrisch zur Längsmittelachse L angeordnet werden können.

### Bezugszeichenliste

- 1: Außengewindeelement
- 2: Kopf
- 3: Schaft
- 4: Außengewinde
- 5: Antrieb
- 6: Aussparung
- 7: Oberseite
- 8: Innenumfangsfläche (Umfangsfläche)
- 9: Aussparungsgrund (Grundfläche)
- 10: Formschlussmittel
- 11: Umfangsrand
- 12: Werkzeug
- 13: Antriebsabschnitt
- 14: Elektromotor
- 15: Außenkonusabschnitt
- 16: Werkzeugformschlussmittel
- 17: Roboterarm
- 18: Außenkonusfläche
- 19: Stirnseite
- 20: Umfangsrand
- 21: Gewindeelement
- 22: Nutwand
- 23: Nut
- 24: Nutboden
- 25: Rampe
- 26: Vertiefung
- 27: innere Seitenwand
- 28: äußere Seitenwand
- 29: lnnengewindelement
- 30: Sackloch
- 31: Innengewinde
- 32: Wand
- 33: Umfangsbund
- 34: Stirnseite
- 35: Grundflächen
- 36: Oberseiten
- 37: Fortsätze

- B: Betätigungsrichtung
- L: Längsmittelachse
- L_{F}: Formschlussmittellängsmittelachse bzw. Formschlussmittellängsachse
- D: Drehachse
- E: Achse der Werkzeugformschlussmittel
- A: Achse zu der Umfangsfläche (8 oder 18) konzentrisch ist
- α: Winkel zwischen Achse A und konischer Umfangsfläche (Außenumfangsfläche (18) oder Innenumfangsfläche (8)
- β: Winkel zwischen Gegenkonusfläche des Werkzeugs und Drehachse D

## Patentansprüche

1. Gewindeelement, insbesondere Außen- (1) oder Innengewindeelement (29) mit einem, vorzugsweise als Außen- (4) oder Innengewinde (31) ausgebildeten, Gewinde und mit einem Antrieb (5) zum Zusammenwirken mit einem Antriebswerkzeug zum Verschrauben des Gewindes mit einem Gegengewinde eines Gegengewindeelementes, wobei der Antrieb (5) sich in axialer Richtung erstreckende, exzentrisch zu einer Längsmittelachse (L) des Gewindeelementes (21) angeordnete Formschlussmittel (10), sowie eine Umfangsfläche (8) aufweist, die zumindest abschnittsweise als konzentrisch zu der Längsmittelachse (L) angeordnete Konusfläche (18) ausgebildet ist, die mit der Längsmittelachse (L) einen Winkel (a) einschließt, wobei der Winkel (a) weniger als 10° beträgt,
**dadurch gekennzeichnet,**
**dass** die Formschlussmittel (10) derart ausgebildet sind, dass mit diesen das Gewindeelement (21) ausschließlich in eine Umfangsrichtung, insbesondere in Festziehrichtung, betätigbar ist, und dass den Formschlussmitteln (10) eine in Umfangsrichtung gekrümmte, vorzugsweise stufenlose, sich in axialer Richtung erstreckende Rampe (25) zugeordnet ist
und
**dass** die Rampe (25) vom Nutgrund einer in Umfangsrichtung gekrümmten-Nut (23) gebildet ist,
oder
**dass** die mindestens eine Rampe (25) auf einer Stirnseite (19, 34) eines die Konusfläche in radialer Richtung nach außen überragenden Umfangsbundes (33) angeordnet ist.

2. Gewindeelement nach Anspruch 1,
**dadurch gekennzeichnet,**
**dass** der Winkel (a) so gewählt ist, dass das in einem mit der Umfangsfläche (8) korrespondierenden Gegenkonus ausschließlich aufgrund der Klemmwirkung zwischen der Umfangsfläche (8) und dem Gegenkonus gehaltene Gewindeelement bei paralleler Ausrichtung der Längsmittelachse (L) zur Vertikalen und gleichzeitiger Ausrichtung des Gewindeelements in Richtung Boden mit einer Klemmkraft gehalten wird, die zumindest der Gewichtskraft des Gewindeelementes entspricht, vorzugsweise zumindest der 1,1-fachen Gewichtskraft, noch weiter bevorzugt mindestens der 1,5-fachen oder mindestens der 2-fachen oder mindestens der 3-fachen oder mindestens der 4-fachen oder mindestens der 5-fachen Gewichtskraft des Gewindeelementes

3. Gewindeelement nach einem der Ansprüche 1 oder 2,
**dadurch gekennzeichnet,**
**dass** der Winkel (a) weniger als 9°, vorzugsweise weniger als 8°,noch weiter bevorzugt weniger als 7°, noch weiter bevorzugt weniger als 6°, noch weiter bevorzugt weniger als 5°, noch weiter bevorzugt weniger als 4°, noch weiter bevorzugt weniger als 3°, noch weiter bevorzugt weniger als 2°, ganz besonders bevorzugt mehr als 0,5°, beträgt.

4. Gewindeelement nach einem der vorhergehenden Ansprüche,
**dadurch gekennzeichnet,**
**dass** die Umfangsfläche (8) eine, zumindest abschnittsweise außenkonische, Außenumfangsfläche ist und/oder dass die Umfangsfläche (8) eine, zumindest abschnittsweise, innenkonische Innenumfangsfläche (8) einer stirnseitigen Aussparung (6) ist.

5. Gewindeelement nach einem der vorhergehenden Ansprüche,
**dadurch gekennzeichnet,**
**dass** die Formschlussmittel (10) eine einzige, sich in Einschraubrichtung erstreckende, insbesondere zylindrische oder nutförmige, Vertiefung (26) oder einen einzigen sich entgegen der Einschraubrichtung erstreckender Fortsatz umfassen, die derart relativ zu der Umfangsfläche (8) angeordnet sind, dass beim Zusammenwirken eines Antriebswerkzeugs mit dem Antrieb (5) sich das Antriebswerkzeug an einer Umfangswand, der Vertiefung (16) oder des Fortsatzes und gleichzeitig an der Umfangsfläche (8) ausübt.

6. Gewindeelement nach einem der vorhergehenden Ansprüche,
**dadurch gekennzeichnet,**
**dass** die Rampe (25) auf einer von der einzigen Umfangsrichtung, in die das Gewindeelement (21) betätigbar ist abgewandten Umfangsrichtung angeordnet ist.

7. Gewindeelement nach einem der vorhergehende Ansprüche,
**dadurch gekennzeichnet,**
**dass** an dem Umfangsbund (33) mehrere, vorzugsweise gleichmäßig in Umfangsrichtung angeordnete Rampen (25), jeweils mit diesen zugeordneten Formschlussmitteln (10) vorgesehen sind.

8. Gewindeelement nach einem der vorhergehenden Ansprüche,
**dadurch gekennzeichnet,**
**dass** die Formschlussmittel (10), zumindest in einem Umfangsabschnitt, eine zylindrische innere oder äußere Mantelfläche aufweisen.

9. Gewindeelement nach einem der vorhergehenden Ansprüche,
**dadurch gekennzeichnet,**
**dass** das Gewindeelement (21) als, vorzugsweise durch Kaltfließpressen hergestelltes, Pressformteil aus Metall ausgebildet ist.

10. Gewindeelement nach einem der vorhergehenden Ansprüche,
**dadurch gekennzeichnet,**
**dass** die Umfangsfläche (8) über den größten Teil, vorzugsweise über 90%, besonders bevorzugt über 100%ihrer Axialerstreckung als Konusfläche ausgebildet ist.

11. Gewindeelement nach einem der vorhergehenden Ansprüche,
**dadurch gekennzeichnet,**
**dass** der Antrieb (5) eine sich winklig zur Umfangsfläche (8) erstreckende Grundfläche (9) aufweist, von der aus sich die Formschlussmittel (10) in axialer Richtung erstrecken.

12. Gewindeelement nach einem der vorhergehenden Ansprüche,
**dadurch gekennzeichnet,**
**dass** die konische Umfangsfläche (8) radial und/oder axial zu den Formschlussmitteln (10) versetzt angeordnet ist.

13. Werkzeug zum Festziehen eines Außengewindeelementes (1) nach einem der vorhergehenden Ansprüche,
**dadurch gekennzeichnet,**
**dass**, vorzugsweise als Schraubautomat ausgebildete, Werkzeug (12) einen einen Gegenkonusabschnitt (15) umfassenden, zum Antrieb (5) des Außengewindes (4) komplementären Antriebsabschnitt (13) aufweist.

## Claims

1. A threaded element, in particular an outer (1) or an inner threaded element (29), with a thread preferably constructed as an outer (4) or inner thread (31), and with a drive (5) for interaction with a driving tool for screwing the thread with a counter thread of a counter threaded element, wherein the drive (5) has form-fitting means (10) extending in axial direction and arranged eccentrically to a longitudinal centre axis (L) of the threaded element (21), and has a circumferential surface (8) which is constructed at least in sections as a conical surface (18) arranged concentrically to the longitudinal centre axis (L), which conical surface forms an angle (a) with the longitudinal centre axis (L), wherein the angle (a) is less than 10°,
**characterized in that**
the form-fitting means (10) are constructed such that with these the threaded element (21) is able to be actuated exclusively in a circumferential direction, in particular in the tightening direction, and that a preferably continuous ramp (25), curved in circumferential direction, extending in axial direction, is associated with the form-fitting means (10)
and
that the ramp (25) is formed from the groove base of a groove (23) which is curved in circumferential direction,
or
that the at least one ramp (25) is arranged on a front side (19, 34) of a circumferential collar (33) projecting in radial direction outwards over the conical surface.

2. The threaded element according to Claim 1,
**characterized in that**
the angle (a) is selected so that the threaded element held in a counter-cone corresponding with the circumferental surface (8) exclusively owing to the clamping effect between the circumferential surface (8) and the counter-cone is held with parallel alignment of the longitudinal centre axis (L) to the vertical and with simultaneous alignment of the threaded element in the direction of the base with a clamping force which corresponds at least to the weight force of the threaded element, preferably at least 1.1 times the weight force, further preferably at least 1.5 times or at least 2 times or at least 3 times or at least 4 times or at least 5 times the weight force of the threaded element.

3. The threaded element according to one of Claims 1 or 2,
**characterized in that**
the angle (a) is less than 9°, preferably less than 8°, further preferably less than 7°, further preferably less than 6°, further preferably less than 5°, further preferably less than 4°, further preferably less than 3°, further preferably less than 2°, most particularly preferably more than 0.5°.

4. The threaded element according to one of the preceding claims,
**characterized in that**
the circumferential surface (8) is an at least partially outer-conical outer circumferential surface and/or that the circumferential surface (8) is an at least partially inner-conical inner circumferential surface (8) of a recess (6) on the end side.

5. The threaded element according to one of the preceding claims,
**characterized in that**
the form-fitting means (10) comprise a single, in particular cylindrical or groove-shaped, depression (26) extending in the screwing-in direction, or a single extension extending contrary to the screwing-in direction, which are arranged relative to the circumferential surface (8) such that on the interaction of a driving tool with the drive (5), the driving tool acts on a circumferential wall of the depression (16) or of the extension and simultaneously on the circumferential surface (8).

6. The threaded element according to one of the preceding claims,
**characterized in that**
the ramp (25) is arranged on a circumferential direction facing away from the sole circumferential direction in which the threaded element (21) is able to be actuated.

7. The threaded element according to one of the preceding claims,
**characterized in that**
on the circumferential collar (33) several ramps (25), preferably arranged uniformly in circumferential direction, are provided respectively with form-fitting means (10) associated therewith.

8. The threaded element according to one of the preceding claims,
**characterized in that**
the form-fitting means (10) have a cylindrical inner or outer shell surface at least in a circumferential portion.

9. The threaded element according to one of the preceding claims,
**characterized in that**
the threaded element (21) is constructed from metal as a press-formed part, preferably produced by cold extrusion.

10. The threaded element according to one of the preceding claims,
**characterized in that**
the circumferential surface (8) is constructed as a conical surface over the majority, preferably over 90%, particularly preferably over 100% of its axial extent.

11. The threaded element according to one of the preceding claims,
**characterized in that**
the drive (5) has a base surface (9) extending in an angular manner to the circumferential surface (8), from which base surface the form-fitting means (10) extend in axial direction.

12. The threaded element according to one of the preceding claims,
**characterized in that**
the conical circumferential surface (8) is arranged offset radially and/or axially to the form-fitting means (10).

13. A tool for tightening an outer threaded element (1) according to one of the preceding claims,
**characterized in that**
the tool (12), preferably constructed as an automatic screwing device, has a drive portion (13), comprising a counter-conical portion (15), complementary to the drive (5) of the outer thread (4).

## Revendications

1. Élément fileté, en particulier élément à filetage extérieur (1) ou intérieur (29) comprenant un filetage réalisé de préférence sous la forme d'un filetage extérieur (4) ou intérieur (31), et comprenant un entraînement (5) pour coopérer avec un outil d'entraînement pour visser le filetage sur un contre-filetage d'un élément à contre-filetage, l'entraînement (5) comprenant des moyens d'engagement par coopération de formes (10) s'étendant dans la direction axiale et disposés de manière excentrique par rapport à un axe médian longitudinal (L) de l'élément fileté (21), ainsi qu'une surface périphérique (8) qui est réalisée, au moins en partie, sous forme de surface conique (18) disposée de manière concentrique à l'axe médian longitudinal (L), laquelle forme avec l'axe médian longitudinal (L) un angle (a), l'angle (a) valant moins de 10°,
**caractérisé en ce que**
les moyens d'engagement par coopération de formes (10) sont réalisés de telle sorte qu'à l'aide de ceux-ci, l'élément fileté (21) peut être actionné exclusivement dans une direction périphérique, en particulier dans la direction de serrage à fond, et **en ce qu'**une rampe (25), de préférence sans gradin, s'étendant dans la direction axiale et courbée dans la direction périphérique est associée aux moyens d'engagement par coopération de formes (10)
et
**en ce que** la rampe (25) est formée par le fond de rainure d'une rainure (23) courbée dans la direction périphérique,
ou
**en ce que** l'au moins une rampe (25) est disposée sur un côté frontal (19, 34) d'un épaulement périphérique (33) dépassant vers l'extérieur dans la direction radiale au-delà de la surface conique.

2. Élément fileté selon la revendication 1,
**caractérisé en ce que**
l'angle (a) est sélectionné de telle sorte que l'élément fileté retenu dans un cône conjugué correspondant à la surface périphérique (8) exclusivement en raison de l'effet de serrage entre la surface périphérique (8) et le cône conjugué soit, en cas d'orientation parallèle de l'axe médian longitudinal (L) par rapport à la verticale et en même temps d'orientation de l'élément fileté en direction du fond, retenu par une force de serrage qui correspond au moins au poids de l'élément fileté, de préférence à au moins 1,1 fois le poids, de préférence encore à au moins 1,5 fois ou au moins 2 fois ou au moins 3 fois ou au moins 4 fois ou au moins 5 fois le poids de l'élément fileté.

3. Élément fileté selon la revendication 1 ou 2,
**caractérisé en ce que**
l'angle (a) vaut moins de 9°, de préférence moins de 8°, de préférence encore moins de 7°, de préférence encore moins de 6°, de préférence encore moins de 5°, de préférence encore moins de 4°, de préférence encore moins de 3°, de préférence encore moins de 2°, mieux encore plus de 0,5°.

4. Élément fileté selon l'une quelconque des revendications précédentes,
**caractérisé en ce que**
la surface périphérique (8) est une surface périphérique extérieure au moins en partie extérieurement conique et/ou **en ce que** la surface périphérique (8) est une surface périphérique intérieure (8) au moins en partie intérieurement conique d'un évidement frontal (6).

5. Élément fileté selon l'une quelconque des revendications précédentes,
**caractérisé en ce que**
les moyens d'engagement par coopération de formes (10) comportent un renfoncement (26) unique s'étendant dans le sens de vissage, en particulier cylindrique ou en forme de rainure, ou une saillie unique s'étendant en sens inverse du sens de vissage, lesquels sont disposés par rapport à la surface périphérique (8) de telle sorte que, lors de la coopération d'un outil d'entraînement avec l'entraînement (5), l'outil d'entraînement s'applique contre une paroi périphérique du renfoncement (16) ou de la saillie et en même temps contre la surface périphérique (8).

6. Élément fileté selon l'une quelconque des revendications précédentes,
**caractérisé en ce que**
la rampe (25) est disposée sur une direction périphérique opposée à la direction périphérique unique dans laquelle l'élément fileté (21) peut être actionné.

7. Élément fileté selon l'une quelconque des revendications précédentes,
**caractérisé en ce que**
plusieurs rampes (25) disposées de préférence régulièrement dans la direction périphérique sur l'épaulement périphérique (33) sont respectivement pourvues de moyens d'engagement par coopération de formes (10) associés à celles-ci.

8. Élément fileté selon l'une quelconque des revendications précédentes,
**caractérisé en ce que**
les moyens d'engagement par coopération de formes (10) présentent, au moins dans une section périphérique, une surface d'enveloppe cylindrique intérieure ou extérieure.

9. Élément fileté selon l'une quelconque des revendications précédentes,
**caractérisé en ce que**
l'élément fileté (21) est réalisé sous forme de pièce moulée par compression en métal fabriquée de préférence par extrusion à froid.

10. Élément fileté selon l'une quelconque des revendications précédentes,
**caractérisé en ce que**
la surface périphérique (8) est réalisée sous forme de surface conique sur la majeure partie, de préférence sur 90 %, de manière particulièrement préférée sur 100 %, de son étendue axiale.

11. Élément fileté selon l'une quelconque des revendications précédentes,
**caractérisé en ce que**
l'entraînement (5) comprend une surface de base (9) s'étendant angulairement par rapport à la surface périphérique (8), à partir de laquelle surface de base s'étendent, dans la direction axiale, les moyens d'engagement par coopération de formes (10).

12. Élément fileté selon l'une quelconque des revendications précédentes,
**caractérisé en ce que**
la surface périphérique conique (8) est disposée de manière décalée radialement et/ou axialement par rapport aux moyens d'engagement par coopération de formes (10).

13. Outil pour serrer à fond un élément à filetage extérieur (1) selon l'une quelconque des revendications précédentes,
**caractérisé en ce que**
l'outil (12), réalisé de préférence sous la forme d'une visseuse automatique, comprend une section d'entraînement (13) complémentaire comportant une section de cône conjugué (15) pour l'entraînement (5) du filetage extérieur (4).
